# EUROPEAN PATENT APPLICATION

(11) **EP 2 484 734 A2**
(43) Date of publication of application: **08.08.2012**
(21) Application number: 12153462.2
(22) Date of filing: 01.02.2012
(51) Int. Cl.: C09J 7/02, C09J 9/02, C09J 11/08

(54) **Pressure-sensitive adhesive sheet and surface protective film**

(30) Priority: 04.02.2011 JP 2011023276
(71) Applicant: Nitto Denko Corporation, Ibaraki-shi, Osaka 567-8680 (JP)
(72) Inventor: Kataoka, Kenichi, Ibaraki-shi, Osaka 567-8680 (JP); Ukei, Natsuki, Ibaraki-shi, Osaka 567-8680 (JP); Haruta, Hiromoto, Ibaraki-shi, Osaka 567-8680 (JP); Niimi, Kenjiro, Ibaraki-shi, Osaka 567-8680 (JP); Amano, Tatsumi, Ibaraki-shi, Osaka 567-8680 (JP)
(74) Representative: Grünecker, Kinkeldey, Stockmair & Schwanhäusser

(57) **Abstract**

A pressure-sensitive adhesive sheet 1 provided by the present invention is provided with a substrate film 12 comprising a transparent resin material, an antistatic layer 14 provided on a first side 12A thereof, and a pressure-sensitive adhesive layer 20 provided on a second side 12B thereof. The antistatic layer 14 contains an antistatic component (for example, an electroconductive polymer) and a binder resin, and has an average thickness Dave of 1 nm to less than 100 nm. The pressure-sensitive adhesive layer 20 contains an acrylic polymer as a base polymer and an ionic compound (such as an ionic liquid and alkaline metal salt) as an antistatic component.

## Description

### CROSS-REFERENCE

This application claims priority to Japanese Patent Application No. 2011-023276 filed on February 4, 2011, the entire contents of which are incorporated herein by reference.

### BACKGROUND OF THE INVENTION

### 1. Field of the Invention

The present invention relates to a pressure-sensitive adhesive (PSA) sheet having a PSA layer on a film comprising a transparent resin material, and more particularly, to a PSA sheet provided with an antistatic function. The PSA sheet according to the present invention is suitable for applications in which it is adhered to a plastic product and the like that easily generates static electricity. In particular, the present invention is useful as a surface protective film used for the purpose of protecting the surface of an optical member (such as a polarizing plate, retardation plate, phase difference plate, optical compensation film, reflecting sheet or brightness enhancement film for a liquid crystal display).

### 2. Description of the Related Art

Surface protective films (to also be referred to as surface protective sheets) typically have a configuration in which a PSA is provided on a film-shaped support (substrate).
These protective films are laminated to an adherend (protection target) by means of a PSA as described above, and are therefore used for the purpose of protecting the adherend from damage and pollution during processing or transport. For example, liquid crystal display panels are formed by laminating optical members such as a polarizing plate or retardation plate to liquid crystal cells by means of PSA. In the production of these liquid crystal display panels, polarizing plates laminated to the liquid crystal cells are used by first producing in the form of a roll, unrolling from the roll and then cutting to a desired size corresponding to the shape of the liquid crystal cells. Here, in order to prevent the polarizing plates from being scratched by rubbing against conveyor rollers and the like during an intermediate step, measures are adopted that consist of laminating a surface protective film on one side or both sides (and typically, one side) of the polarizing plates. This surface protective film is removed by peeling at the stage the surface protective film is no longer required. Examples of technical literatures relating to surface protective films include Japanese Patent Application Publication Nos. 2004-223923, 2008-255332, 2006-291172 and 2006-111856.

### SUMMARY OF THE INVENTION

A surface protective film having transparency is preferably used for this type of surface protective film in order to enable visual inspections to be carried out on adherends (such as a polarizing plate) to which the film is adhered. In recent years, the required level of appearance quality of surface protective films has become higher from the viewpoints of facilitating these visual inspections, inspection accuracy and the like. For example, the back side of these surface protective films (side on the opposite side from the side to which an adherend is adhered, namely the back side of a support that configures the surface protective film) is required to have the property of being resistant to abrasions. This is because, if an abrasion is present on a surface protective film, it cannot be determined as to whether the abrasion constitutes damage to the adherend or damage to the surface protective film in the state in which the surface protective film is adhered to the adherend. An example of a measure used to increase the abrasion resistance of the back side of a protective film employs a technique in which a hard surface layer is provided on the back side of the protective film. This surface layer (top coat layer) is typically formed by coating a coating material onto the surface of a transparent resin film followed by drying and curing.

On the other hand, since surface protective films and optical members are comprising (typically, composed of) plastic materials, they have a high level of electrical insulating properties and generate static electricity due to friction and peeling. Consequently, static electricity is easily generated when peeling the surface protective film from an optical member such as a polarizing plate, and when a voltage is applied to liquid crystal while this residual static electricity is still present, there is concern over the occurrence of loss of orientation of liquid crystal molecules and damage to the panel. In addition, the presence of static electricity can also attract dust or cause a decrease in workability. In view of these circumstances, surface protective films (such as a surface protective film for an optical member) are subjected to antistatic treatment. In Japanese Patent Application Publication Nos. 2004-223923 and 2008-255332, for example, antistatic treatment is carried out by means of an antistatic layer or antistatic coating. If the above-mentioned top coat layer is a layer having an antistatic function (antistatic layrer), there is the advantage of enabling formation of the top coat layer and antistatic treatment to be carried out all at once.

However, in the case of observing a protective film adhered to an adherend from the back side (such as when observing in a dark room), if an antistatic layer as described above is provided on the back side of the protective film, the appearance quality of the surface protective film decreases and visibility of the adherend surface decreases. From the viewpoint of preventing this decrease in visibility, it is advantageous to reduce the thickness of the antistatic layer. However, if the thickness of the antistatic layer becomes extremely thin, it becomes difficult for the antistatic layer to impart adequate antistatic properties to the surface protective film. Although increasing the content of the antistatic component has been considered as a technique for compensating for this decrease in antistatic performance accompanying a reduction in thickness, this technique tends to reduce the transparency (namely, reduce visibility) of the antistatic layer.

With the foregoing in view, an object of the present invention is to provide a PSA sheet and a surface protective film that realize higher levels of both appearance quality and antistatic properties.

The PSA sheet disclosed herein is provided with a substrate film comprising a transparent resin material and an antistatic layer provided on a first side (to also be referred to as the "back side") of the film. The antistatic layer contains an antistatic component and a binder resin. The average thickness Dave of the antistatic layer is 1 nm to less than 100 nm. The PSA sheet is also provided with a PSA layer provided on a second side (side on the opposite side from the first side, to also be referred to as the "front side") of the film. The PSA layer contains an acrylic polymer as a base polymer and an ionic compound as an antistatic component.

According to the technology disclosed herein, by providing an extremely thin antistatic layer on the back side of the film, antistatic properties can be imparted to the film while effectively inhibiting decreases in appearance quality (such as phenomena that causes the entire film to whiten). Since a PSA sheet having such superior appearance quality enables visual inspections of products to be carried out accurately by visualizing the product through the film (is highly suitable for appearance inspections), it is preferable for use as a surface protective film and other applications. The reduced thickness of the antistatic layer is also preferable from the viewpoint of having little effect on the properties of the substrate film (such as optical properties or dimensional stability). In addition, since the antistatic layer arranged on the front side of the substrate film contains an ionic compound as an antistatic component, even if the thickness of the antistatic layer arranged on the back side of the film is made to be extremely thin as described above, a PSA sheet is realized that demonstrates favorable antistatic performance. Thus, this PSA sheet is particularly preferable as a PSA sheet (such as a surface protective film) used by adhering to a component that is susceptible to the effects of static electricity in the manner of a polarizing plate and the like. Since the PSA layer employs an acrylic polymer for the base polymer thereof (acrylic PSA layer), it is advantageous in terms of improving transparency of the PSA sheet (and in turn, visual inspection suitability). Thus, according to the PSA sheet disclosed herein, higher levels of both visual inspection suitability and antistatic properties can be realized. This PSA sheet is preferable for use as a surface protective film that can be used in an aspect that enables products to undergo visual inspections by visualizing the products through the PSA sheet (such as a surface protective film for an optical component) as well as other applications.

A plastic film comprising (typically, composed of) a transparent thermoplastic resin material can be preferably employed for the above-mentioned substrate film. A preferable example of the plastic film is a polyester film.

Here, a polyester film refers to that having for the main resin component thereof a polymer material having a main backbone based on ester bonds, such as polyethylene terephthalate (PET), polyethylene naphthalate (PEN) or polybutylene terephthalate (polyester resin). Although this polyester film has properties preferable for use as a PSA sheet, such as superior optical properties and dimensional stability (and particularly for use as a surface protective film, such as a surface protective film for an optical component, able to be used in an aspect that enables products to be visually inspected by visualizing through the film), it also has the property of being easily charged as is. Thus, in a PSA sheet that uses a polyester film for the substrate thereof, being able to achieve high levels of both antistatic properties and appearance quality by applying the technology disclosed herein is particularly highly significant.

Various types of electroconductive polymers can be preferably employed as the antistatic component contained in the above-mentioned antistatic layer since they have low susceptibility to the effects of moisture. An antistatic layer containing at least polythiophene as the electroconductive polymer is preferable. An acrylic resin, for example, can be preferably employed as the binder resin contained in the antistatic layer. In a preferable aspect of the technology disclosed herein, the antistatic layer is crosslinked with a crosslinking agent (such as a melamine-based crosslinking agent). As a result, scratch resistance of the antistatic layer, for example, can be further improved.

In another preferable aspect of the technology disclosed herein, the above-mentioned antistatic layer contains a lubricant. Here, a lubricant refers to a component having an action that lowers the coefficient of friction of the antistatic layer by being mixed in a material that configures the antistatic layer. An antistatic layer that contains such a lubricant is preferable since it facilitates the realization of a PSA sheet (such as a surface protective film) having superior scratch resistance.

At least one of an ionic liquid and an alkaline metal salt can be preferably employed as the ionic compound (antistatic component) contained in the PSA layer. The ionic liquid may be, for example, one or two or more of a nitrogen-containing onium salt (such as a pyridinium salt or imidazolium salt), a sulfur-containing onium salt and a phosphorous-containing onium salt. A preferable example of the alkaline metal salt is a lithium salt.

### BRIEF DESCRIPTION OF THE DRAWINGS

FIG. 1 is a schematic cross-sectional view showing an example of the configuration of a surface protective film according to the present invention;
FIG. 2 is a schematic cross-sectional view showing another example of the configuration of a surface protective film according to the present invention; and
FIG. 3 is an explanatory diagram showing a method for measuring peeling static voltage.

### DETAILED DESCRIPTION OF THE INVENTION

Preferred embodiments of the present invention are described below. Technical matters necessary to practice the invention, other than those specifically referred to in the present description, may be understood as design matters for a person skilled in the art that are based on the related art in the pertinent field. The present invention may be practiced based on the contents disclosed herein and common general technical knowledge in the pertinent field.
In addition, embodiments described in the drawings are schematic representations for providing a clear explanation of the present invention, and do not accurately represent the size or scale of the PSA sheet of the present invention actually provided as a product.

<Overall Structure of PSA Sheet>
The PSA sheet disclosed herein can typically be that of a form referred to as a PSA tape, PSA label or PSA film and the like. Since the PSA sheet enables visual inspections of products to be carried out accurately as a result of allowing products to be visualized through the PSA sheet, it is particularly preferable for use as a surface protective film that protects the surface of an optical component during processing or transport of the optical component (such as an optical component used as constituent element of a liquid crystal display such as a polarizing plate or retardation plate). Although the PSA layer in the PSA sheet is typically formed continuously, it is not limited to such a form, but rather may be a PSA layer formed in a regular or random pattern such as dots or stripes. In addition, the PSA sheet disclosed herein may be in the form of a roll or sheets.

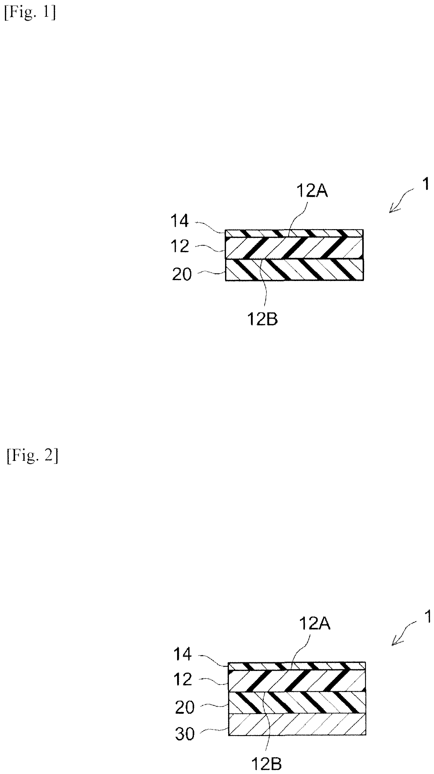

An example of the typical configuration of the PSA sheet disclosed herein is schematically shown in FIG. 1. This PSA sheet 1 is provided with a substrate film (such as a polyester film) 12 comprising (typically, composed of) a transparent resin material, an antistatic layer 14 provided on a first side 12A thereof, and a PSA layer 20 provided on a second side 12B (surface on the opposite side from the antistatic layer 14) of the film 12. The PSA sheet 1 is used by adhering the PSA layer 20 to an adherend (protection target such as the surface of an optical component such as a polarizing plate). The PSA sheet 1 prior to use (namely, before adhering to the adherend) can be of a form in which the surface (side adhered to the adherend) of the PSA layer 20 is protected by a release liner 30 in which at least the side facing the PSA layer 20 serves as the peeled side as shown in FIG. 2. Alternatively, the PSA sheet 1 may also be of a form in which the PSA layer 20 contacts the back side of the substrate film 12 (surface of the antistatic layer 14) and protects the surface thereof by winding the PSA sheet 1 into the shape of a roll.

As shown in FIGS. 1 and 2, in the case of an aspect in which the antistatic layer 14 is formed directly (without having another layer interposed there between) on the first side 12A of the film 12, and the antistatic layer 14 is exposed on the back side of the PSA sheet 1 (namely, an aspect in which the antistatic layer 14 also serves as a top coat layer), the productivity of an antistatic layer-provided film (and in turn, a PSA sheet obtained by using this film) in which the antistatic layer 14 is provided on the film 12 is more favorable than a configuration in which an antistatic layer is provided separately from a top coat layer. In addition, since the number of layers that configure the PSA sheet can be reduced, this is also advantageous from the viewpoint of improving visibility of a product surface when carrying out a visual inspection of a product by visualizing the product through the film.

<Substrate Film>
In the technology disclosed herein, there are no particular limitations on the resin material that configures the substrate film provided that it can be formed into the shape of a transparent sheet or film. A substrate film that is able to configure a film having one, two or more properties among transparency, mechanical strength, thermal stability, moisture impermeability, isotropy and dimensional stability and the like is preferable. Thus, a non-porous film is preferable as a substrate film from the viewpoint of mechanical strength and moisture impermeability. The above-mentioned "non-porous film" does not include a non-woven fabric which is one of typical porous films. For example, a plastic film comprising (typically, composed of) a resin material having for a main resin component thereof (main component among resin components, and typically a component that accounts for 50% by weight or more of the resin components) a polyester-based polymer such as polyethylene terephthalate (PET), polyethylene naphthalate (PEN) or polybutylene terephthalate, a cellulose-based polymer such as diacetyl cellulose or triacetyl cellulose, a polycarbonate-based polymer or an acrylic-based polymer such as poly(methyl methacrylate), can be preferably used for the above-mentioned substrate film. Other examples of the resin material include styrene-based polymers such as polystyrene or acrylonitrile-styrene copolymer, olefin-based polymers such as polyethylene, polypropylene, polyolefins having a cyclic and/or norbornene structure or ethylene-propylene copolymers, vinyl chloride-based polymers, and amide-based polymers such as nylon 6, nylon 6,6 or aromatic polyamides.
Still other examples of the resin material include imide-based polymers, sulfone-based polymers, polyether sulfone-based polymers, polyether ether ketone-based polymers, polyphenylene sulfide-based polymers, vinyl alcohol-based polymers, vinylidene chloride-based polymers, vinyl butyral-based polymers, arylate-based polymers, polyoxymethylene-based polymers and epoxy-based polymers. The substrate film may also be comprising (typically, composed of) a blend of two or more types of the above-mentioned polymers.

Optical properties (such as phase difference) of the above-mentioned substrate film preferably have as little anisotropy as possible. It is beneficial to reduce optical anisotropy particularly in the case of a substrate film used as a surface protective film of an optical component. A film comprising (typically, composed of) a thermoplastic resin material can be used preferably from the viewpoints of having heat resistance and solvent resistance while also having flexibility and superior moldability. The above-mentioned film may be a non-oriented film or an oriented film (such as a uniaxially oriented film or biaxially oriented film). In addition, the film may have a single layer structure or structure in which a plurality of layers having different compositions is laminated.

The thickness of the substrate film can be suitably selected corresponding to the application and purpose of the PSA sheet. Normally, the thickness is suitably roughly 10 µm to 200 µm, preferably roughly 15 µm to 100 µm, and more preferably roughly 18 µm to 75 µm based on a balance between workability, such as strength or handling ease, cost, visual inspectability and the like. Normally, the above-mentioned film preferably demonstrates a refractive index of roughly 1.43 to 1.6, and more preferably roughly 1.45 to 1.5. In addition, the optical transmittance of the film is preferably 70% to 99% and more preferably 80% to 99% (for example, 85% to 99%).

Various types of additives such as an antioxidant, ultraviolet absorber, plasticizer or colorant (such as a pigment or dye) may also be mixed as necessary in the resin material that configures the substrate film. A commonly known or commonly used surface treatment, such as corona discharge treatment, plasma treatment, ultraviolet radiation treatment, acid treatment, alkaline treatment or coating of an undercoating agent, may be carried out on the first side (surface on the side on which the antistatic layer is provided) of the above-mentioned polyester film. This surface treatment can be treatment for, for example, enhancing adhesiveness between the film and the antistatic layer. Surface treatment in which polar groups such as hydroxyl groups (-OH groups) are introduced onto the surface of the film can be used preferably. In addition, similar surface treatment may also be carried out on the second side (surface on the side on which the PSA layer is formed) of the film. This surface treatment can be treatment for enhancing adhesiveness (anchoring property of the PSA layer) between the film and the PSA layer.

<Thickness of Antistatic Layer>
The PSA sheet disclosed herein has an antistatic layer having an average thickness Dave of 1 nm to less than 100 nm on a first side of the above-mentioned film. If Dave is excessively large, the appearance quality of the PSA sheet (and in turn, the visual inspectability through the PSA sheet) decreases easily. On the other hand, if Dave is excessively small, the antistatic performance of the PSA sheet decreases easily. In a preferable aspect, Dave is 2 nm to 50 nm. Dave may also be 2 nm to 30 nm, 2 nm to 20 nm or 5 nm to 15 nm.

The thickness Dn of the above-mentioned antistatic layer can be determined by observing a cross-section of the PSA sheet with a transmission electron microscope (TEM). For example, a result obtained by embedding a target sample in resin and observing a cross-section of the sample by TEM using an ultrathin section method can be used as the thickness Dn of the antistatic layer in the technology disclosed herein. The Model "H-7650" transmission electron microscope manufactured by Hitachi Ltd. can be used for the TEM.
In an example to be subsequently described, the thickness (average thickness within a field of view) of the antistatic layer Dn was measured by binarizing images obtained at an acceleration voltage of 100 kV and magnification factor of 60,000X that measured 250 nm in the direction of width (direction perpendicular to the coating direction of a PSA composition) of a cross-section obtained by sectioning the PSA sheet along a straight line extending across the direction of width of the PSA sheet to determine the cross-sectional area of an antistatic layer, followed by dividing this by the sample length (here, 250 nm) within the field of view. Furthermore, prior to embedding in resin as described above, the sample may be treated with a heavy metal stain for the purpose of making the antistatic layer more distinct. In addition, the thickness Dn of the antistatic layer may also be determined by preparing a calibration curve and calculating the correlation between thickness as determined by TEM and detection results obtained with various types of thickness detection devices (such as a surface roughness tester, interference thickness gauge, infrared spectrophotometer or various types of X-ray diffraction devices).

A value obtained by determining the thickness Dn of the antistatic layer for several (preferably two or more, and more preferably three or more) different measurement points and calculating the arithmetic average thereof can be used for the average thickness Dave of the antistatic layer in the technology disclosed herein. For example, the average thickness Dave can be determined by measuring the thickness Dn of the antistatic layer at three measurement points arranged at equal intervals (such that adjacent measurement points are preferably at least 2 cm (and for example, roughly 5 cm or more) apart) along a straight line (such as a straight line that crosses the antistatic layer in the direction of width) that crosses the antistatic layer (thickness at each measurement point may be measured directly by observing each measurement point by TEM or detection results obtained with a suitable thickness detection device may be converted to thickness using a calibration curve as previously described), followed by determining the arithmetic average of those results. More specifically, Dave can be determined, for example, in accordance with the thickness measurement method described in the examples to be subsequently described.

<Composition of Antistatic Layer (Binder Resin)>
The antistatic layer in the technology disclosed herein contains an antistatic component (component that has an action of preventing the PSA sheet from becoming electrically charged) and a binder resin. The binder resin can be one type or two or more types of resins selected from various types of resins such as a thermosetting resin, ultraviolet curable resin, electron beam curable resin and two-component mixed resin. A resin capable of forming an antistatic layer having superior scratch resistance and superior optical transmittance is preferably selected.

Specific examples of thermosetting resins include those having for a base resin thereof an acrylic resin, acrylic urethane resin, acrylic styrene resin, acrylic silicon resin, silicone resin, polysilazane resin, polyurethane resin, fluorine resin, polyester resin and polyolefin resin. Among these, a thermosetting resin such as an acrylic resin, acrylic urethane resin and acrylic styrene resin can be used preferably.

Specific examples of ultraviolet curable resins include monomers, oligomers, polymers and mixtures thereof of various types of resins such as polyester resin, acrylic resin, urethane resin, amide resin, silicone resin and epoxy resin. An ultraviolet curable resin containing a polyfunctional monomer and/or oligomer thereof having two or more (more preferably 3 or more, and for example, roughly 3 to 6) ultraviolet polymerizable functional groups in a molecule thereof can be used preferably since it has favorable ultraviolet curability and easily forms a layer having high hardness. Acrylic monomers such as polyfunctional acrylates and polyfunctional methacrylates can be preferably used for the above-mentioned polyfunctional monomer.

In one aspect of the technology disclosed herein, the binder resin is a resin having an acrylic polymer as a base polymer thereof (main component of the polymer components, or in other words, the component accounting for 50% by weight or more of all polymer components). Here, an "acrylic polymer" refers a polymer having for the main constituent monomer component thereof (monomer main component, or in other words, component that accounts for 50% by weight or more of the total amount of monomer that configures the acrylic polymer) a monomer having at least one (meth)acryloyl group in a molecule thereof (to also be referred to as an "acrylic monomer").

In the present description, a "(meth)acryloyl group" collectively refers to an acryloyl group and a methacryloyl group. Similarly, a "(meth)acrylate" collectively refers to an acrylate and methacrylate.

In one aspect of the technology disclosed herein, the main component of the acrylic resin is an acrylic polymer containing methyl methacrylate (MMA) as a constituent monomer component. Normally, a copolymer of MMA and one or two or more other types of monomers (and typically, mainly an acrylic monomer other than MMA) is preferable. The copolymerization ratio of MMA is typically 50% by weight or more (for example, 50% by weight to 90% by weight), and preferably 60% by weight or more (for example, 60% by weight to 85% by weight). Preferable examples of monomers able to be used as copolymer components include (cyclo)alkyl(meth)acrylates other than MMA. Furthermore, the term "(cyclo)alkyl" here refers to both alkyl and cycloalkyl inclusively.

Examples of compounds that can be used for the above-mentioned (cyclo)alkyl(meth)acrylate include alkyl acrylates in which the number of carbon atoms of the alkyl group is 1 to 12, such as methyl acrylate, ethyl acrylate, n-butyl acrylate, isobutyl acrylate, s-butyl acrylate, t-butyl acrylate and 2-ethylhexyl acrylate (2EHA), alkyl methacrylates in which the number of carbon atoms of the alkyl group is 1 to 6, such as methyl methacrylate (MMA), ethyl methacrylate, n-butyl methacrylate, isopropyl methacrylate and isobutyl methacrylate, cycloalkyl acrylates in which the number of carbon atoms of the cycloalkyl group is 5 to 7, such as cyclopentyl acrylate and cyclohexyl acrylate, and cycloalkyl methacrylates in which the number of carbon atoms of the cycloalkyl group is 5 to 7, such as cyclopentyl methacrylate and cyclohexyl methacrylate (CHMA).

In the above-mentioned acrylic polymer, a monomer other than those described above (other monomer) may be copolymerized within a range that does not remarkably impair the effects of the present invention. Examples of such monomers include carboxyl group-containing monomers (such as acrylic acid, methacrylic acid, itaconic acid, maleic acid and fumaric acid), acid anhydride group-containing monomers (such as maleic anhydride and itaconic anhydride), hydroxyl group-containing monomers (such as 2-hydroxyethyl (meth)acrylate), vinyl esters (such as vinyl acetate and vinyl propionate), aromatic vinyl compounds (such as styrene and α-methylstyrene), amide group-containing monomers (such as acrylamide and N,N-dimethylacrylamide), amino group-containing monomers (such as aminoethyl (meth)acrylate and N,N-dimethylaminoethyl (meth)acrylate), imide group-containing monomers (such as cyclohexylmaleimide), epoxy group-containing monomers (such as glycidyl (meth)acrylate), (meth)acryloylmorpholine and vinyl ethers (such as methyl vinyl ether). Normally, the copolymerization ratio of these "other monomers" (total amount thereof in the case of using two or more types) is preferably 20% by weight or less, may also be 10% by weight or less, or these monomers may not be substantially copolymerized.

<Composition of Antistatic Layer (Antistatic Component)>
An organic or inorganic electroconductive substance or various types of antistatic agents and the like can be used as the antistatic component.

Examples of the above-mentioned antistatic agents include cationic antistatic agents having a cationic functional group such as a quaternary ammonium salt, pyridinium salt, primary amine group, secondary amine group and tertiary amine group; anionic antistatic agents having an anionic functional group such as a sulfonate ester, sulfate ester, phosphonate ester and phosphate ester; amphoteric antistatic agents such as alkyl betaines and derivatives thereof, imidazoline and derivatives thereof and analine and derivatives thereof; nonionic antistatic agents such as amino alcohols and derivatives thereof, glycerin and derivatives thereof and polyethylene glycol and derivatives thereof; and ionic electroconductive polymers obtained by polymerizing or copolymerizing a monomer having a cationic, anionic or amphoteric ionic electroconductive group. One type of these antistatic agents may be used alone or two or more types may be used in combination.

Examples of the above-mentioned inorganic electroconductive substances include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, indium tin oxide (ITO) and antimony tin oxide (ATO). One type of these inorganic electroconductive substances may be used alone or two or more types may be used in combination.

Preferable examples of cationic antistatic agents include cationic antistatic agents having a quaternary ammonium group (typically represented by the formula:
-N⁺(R¹¹R¹²R¹³)·X⁻, wherein R¹¹, R¹² and R¹³ are respectively the same or different and represent a hydrogen atom or hydrocarbon group, and X⁻ represents an organic or inorganic anion). Examples of commercially available products of these antistatic agents include members of the BONDEIP series manufactured by Konishi Co., Ltd. (such as BONDEIP PA-100, BONDEIP PA-200 and BONDEIP PX).

In a preferable aspect of the technology disclosed herein, the antistatic layer contains at least an organic electroconductive substance as the antistatic component. In particular, the antistatic layer preferably contains various types of electroconductive polymers. Examples of electroconductive polymers include polythiophene, polyaniline, polypyrrole, polyethyleneimine and allylamine-based polymers. One type of these electroconductive polymers may be used alone or two or more types may be used in combination.

Polythiophene and polyaniline are examples of electroconductive polymers able to be used preferably in the technology disclosed herein. A polythiophene having a weight average molecular weight (Mw) based on standard polystyrene of 40 × 10⁴ or less is preferable for the polythiophene, while that having an Mw based on standard polystyrene of 30 × 10⁴ or less is more preferable. Polyaniline having an Mw of 50 × 10⁴ or less is preferable, while that having an Mw of 30 × 10⁴ or less is more preferable. In addition, normally the Mw of these electroconductive polymers is preferably 0.1 × 10⁴ or more and more preferably 0.5 × 10⁴ or more. Furthermore, the polythiophene in the present specification refers to a polymer of a non-substituted thiophene or substituted thiophene. A preferable example of a substituted thiophene polymer in the technology disclosed herein is poly(3,4-ethylenedioxythiophene).

The amount of electroconductive polymer used can be, for example, 10 parts by weight to 200 parts by weight based on 100 parts by weight of the binder resin that configures the antistatic layer, and normally is suitably 25 parts by weight to 150 parts by weight. If the amount of electroconductive polymer used is excessively low, the electrostatic performance of the PSA sheet may tend to be insufficient. If the amount of electroconductive polymer used is excessively high, the scratch resistance of the antistatic layer tends to decrease. In addition, depending on the combination of other components that configures the antistatic layer, compatibility of the electroconductive polymer may be somewhat insufficient, possibly resulting in a decrease in appearance quality.

A method comprising coating a liquid composition (coating composition for forming antistatic layer) followed by drying or curing can be preferably employed as a method for forming the antistatic layer. An electroconductive polymer in a form of being dissolved or dispersed in water (electroconductive polymer aqueous solution) can be preferably used for the electroconductive polymer used to prepare this liquid composition. This electroconductive polymer aqueous solution can be prepared by, for example, dissolving or dispersing an electroconductive polymer having a hydrophilic functional group (that is able to be synthesized by a technique such as copolymerizing monomers having a hydrophilic functional group in a molecule thereof) in water. Examples of the hydrophilic functional groups include a sulfo group, amino group, amido group, imino group, hydroxyl group, mercapto group, hydrazino group, carboxyl group, quaternary ammonium group, sulfate ester group (-O-SO₃H) and phosphate ester group (-O-PO(OH)₂). The hydrophilic functional group may also form a salt. Examples of commercially available products of polythiophene aqueous solutions include members of the "Denatron" series manufactured by Nagase Chemtex Corp. In addition, examples of commercially available products of polyaniline sulfonate aqueous solutions include "Aqua-Pass" manufactured by Mitsubishi Rayon Co., Ltd.

In a preferable aspect of the technology disclosed herein, a polythiophene aqueous solution is used to prepare the above-mentioned coating composition. The use of a polythiophene aqueous solution containing polystyrene sulfonate (PSS) (which can be in a form in which PSS is added to polythiophene as a dopant) is preferable. This aqueous solution can be that which contains polythiophene and PSS at a weight ratio of 1:5 to 1:10. The total content of polythiophene and PSS in the above-mentioned aqueous solution can be, for example, roughly 1% by weight to 5% by weight. An example of a commercially available product of this polythiophene aqueous solution is "Baytron" manufactured by H.C. Stark Corp.
Furthermore, in the case of using a polythiophene aqueous solution containing PSS as described above, the total amount of polythiophene and PSS may be 10 parts by weight to 200 parts by weight (and normally 25 parts by weight to 150 parts by weight) based on 100 parts by weight of the binder resin.

The antistatic layer disclosed herein may also contain one or two or more types of other antistatic components (such as an organic electroconductive substance, inorganic electroconductive substance and antistatic agent other than the electroconductive polymer) along with the electroconductive polymer.

In a preferable aspect of the antistatic layer disclosed herein, the electroconductive polymer is polythiophene (which may be polythiophene doped with PSS), and the binder resin is an acrylic resin. This combination of an electroconductive polymer and binder resin is suitable for forming a PSA sheet (such as a surface protective film) having a thin antistatic layer and superior antistatic performance.

<Composition of Antistatic Layer (Crosslinking Agent, Lubricant, etc.)>
The technology disclosed herein can be preferably carried out in an aspect in which the antistatic layer contains a crosslinking agent. A melamine-based, isocyanate-based or epoxy-based crosslinking agent used to crosslink common resins can be suitably selected and used for the crosslinking agent. The use of this crosslinking agent makes it possible to realize an antistatic layer having more superior scratch resistance. In a preferable aspect, a melamine-based crosslinking agent is at least used for the crosslinking agent. Substantially all of the crosslinking agent may be a melamine-based crosslinking agent.

The containing of a lubricant in the antistatic layer is effective for realizing even better scratch resistance. An common fluorine-based or silicone-based lubricant can be preferably used for the lubricant. The use of a silicone-based lubricant is particularly preferable. Specific examples of silicone-based lubricants include polydimethylsiloxane, polyether-modified polydimethylsiloxane and polymethylalkylsiloxane. A lubricant containing a fluorine compound or silicone compound having an aryl group or aralkyl group (also referred to as a printing lubricant since it is able to yield a resin film having favorable printability) may also be used. In addition, a lubricant containing a fluorine compound or silicone compound having a crosslinking reactive group (reactive lubricant) may also be used.

The amount of lubricant used can be, for example, 5 parts by weight to 90 parts by weight based on 100 parts by weight of the binder resin, and normally 10 parts by weight to 70 parts by weight is suitable. In a preferable aspect, the amount of lubricant used based on 100 parts by weight of the binder resin is 15 parts by weight or more (and more preferably, 20 parts by weight or more). If the amount of lubricant used is excessively low, scratch resistance tends to decrease easily. If the amount of lubricant used is excessively high, there are cases in which appearance quality of the antistatic layer tends to decrease.

This lubricant imparts slippage to the surface of the antistatic layer by bleeding onto the surface thereof, and as a result thereof, is presumed to lower the coefficient of friction. Thus, the suitable use of a lubricant is able to improve scratch resistance through a decrease in the coefficient of friction. In addition, the lubricant (which can also be understood to be a leveling agent) is also able to contribute to reducing thickness unevenness and diminishing interference fringes (and in turn, improve appearance quality) by making surface tension of the antistatic layer uniform. This is particularly significant in a surface protective film for an optical member. In addition, in the case the resin component that configures the antistatic layer is an ultraviolet curable resin, the addition of a fluorine-based or silicone-based lubricant thereto enables the lubricant to bleed onto a coated film surface (interface with air) when a coating composition for forming the antistatic layer is coated onto a substrate and dried, thereby preventing inhibition of curing by oxygen when irradiated with ultraviolet light and enabling the ultraviolet curable resin to be adequately cured even on the uppermost surface of the antistatic layer.

In addition, additives such as an antioxidant, colorant (such as a pigment and dye), fluidity adjuster (such as thixotropic agent and thickener), film formation assistant and catalyst (such as an ultraviolet polymerization initiator present in the composition containing the ultraviolet curable resin) can be contained as necessary in the antistatic layer in the technology disclosed herein.

<Antistatic Layer Formation Method>
The antistatic layer can be preferably formed by a technique comprising applying to the first side of the substrate film the liquid composition obtained by dissolving or dispersing the antistatic component, binder resin and another component used as necessary in a suitable solvent (antistatic coating composition). For example, a technique can be preferably employed in which the antistatic coating composition is coated onto the first side of a film followed by drying and then subjecting to curing treatment (such as heat treatment or ultraviolet treatment) as necessary.

A solvent able to stably dissolve or disperse the components that form the antistatic layer is preferable for the solvent that configures the antistatic coating composition. This solvent can be an organic solvent, water or mixed solvent thereof. Examples of the organic solvent that can be used include one type or two or more types selected from esters such as ethyl acetate, ketones such as methyl ethyl ketone, acetone and cyclohexanone, cyclic ethers such as tetrahydrofuran (THF) and dioxane, aliphatic or alicyclic hydrocarbons such as n-hexane or cyclohexane, aromatic hydrocarbons such as toluene and xylene, aliphatic or alicyclic alcohols such as methanol, ethanol, n-propanol, isopropanol and cyclohexanol, and glycol ethers such as alkylene glycol alkyl ethers and dialkylene glycol monoalkyl ethers.

<PSA Layer>
The PSA layer in the technology disclosed herein contains an acrylic polymer as a base polymer and an ionic compound as an antistatic component. Typically, the PSA layer contains at least one of an ionic liquid and an alkaline metal salt as the ionic compound.

<Ionic Compound (Ionic Liquid)>
An explanation is first provided of the ionic liquid. Furthermore, in the technology disclosed herein, an ionic liquid (to also be referred to as a room temperature molten salt) refers to an ionic compound that is a liquid at room temperature (25°C).

Examples of ionic liquids that can be used preferably include one or two or more types of nitrogen-containing onium salts, sulfur-containing onium salts or phosphorous-containing onium salts. In a preferable aspect, the PSA layer contains an ionic liquid having at least one type of organic cationic component represented by any of the following general formulas (A) to (E). This ionic liquid makes it possible to realize a PSA sheet (such as a surface protective film) having superior antistatic performance in particular.

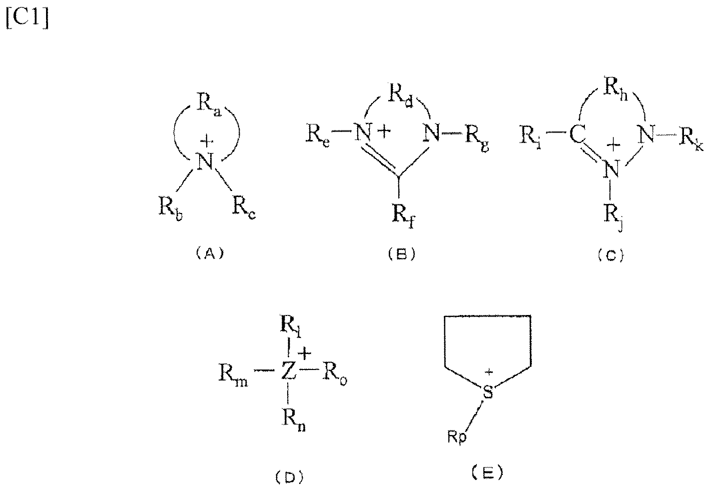

Here, in formula (A) above, Rₐ represents a functional group containing a hydrocarbon group having 4 to 20 carbon atoms or a heteroatom. R_{b} and R_{c} may be the same or different and represent a functional group containing a hydrogen atom, a hydrocarbon group having 1 to 16 carbon atoms or a heteroatom. However, R_{c} is not present in the case the nitrogen atom contains a double bond.
In formula (B) above, R_{d} represents a functional group containing a hydrocarbon group having 2 to 20 carbon atoms or a heteroatom. Rₑ, R_{f} and R_{g} may be the same or different and represent a functional group containing a hydrogen atom, a hydrocarbon group having 1 to 16 carbon atoms or a heteroatom.
In formula (C) above, Rₕ represents a functional group containing a hydrocarbon group having 2 to 20 carbon atoms or a heteroatom. Rᵢ, Rⱼ and Rₖ may be the same or different and represent a functional group containing a hydrogen atom, a hydrocarbon group having 1 to 16 carbon atoms or a heteroatom.
In formula (D) above, Z represents a nitrogen atom, sulfur atom or phosphorous atom. Rₗ, Rₘ, Rₙ and Rₒ may be the same or different and represent a functional group containing a hydrocarbon group having 1 to 20 carbon atoms or a heteroatom. However, Rₒ is not present in the case Z is a sulfur atom.
In formula (E) above, Rₚ represents a functional group containing a hydrocarbon group having 1 to 18 carbon atoms or a heteroatom.

Examples of cations represented by formula (A) include a pyridinium cation, pyrrolidinium cation, piperidinium cation, cations having a pyrroline backbone and cations having a pyrrole backbone.

Specific examples of pyridinium cations include 1-methylpyridinium, 1-ethylpyridinium, 1-propylpyridinium, 1-butylpyridinium, 1-pentylpyridinium, 1-hexylpyridinium, 1-heptylpyridinium, 1-octylpyridinium, 1-nonylpyridinium, 1-decylpyridinium, 1-allylpyridinium, 1-propyl-2-methylpyridinium,
1-butyl-2-methylpyridinium, 1-pentyl-2-methylpyridinium, 1-hexyl-2-methylpyridinium, 1-heptyl-2-methylpyridinium, 1-octyl-2-methylpyridinium, 1-nonyl-2-methylpyridinium, 1-decyl-2-methylpyridinium, 1-propyl-3-methylpyridinium, 1-butyl-3-methylpyridinium, 1-butyl-4-methylpyridinium, 1-pentyl-3-methylpyridinium, 1-hexyl-3-methylpyridinium, 1-heptyl-3-methylpyridinium, 1-octyl-3-methylpyridinium, 1-octyl-4-methylpyridinium, 1-nonyl-3-methylpyridinium, 1-decyl-3-methylpyridinium, 1-propyl-4-methylpyridinium, 1-pentyl-4-methylpyridinium, 1-hexyl-4-methylpyridinium, 1-heptyl-4-methylpyridinium, 1-nonyl-4-methylpyridinium, 1-decyl-4-methylpyridinium and
1-butyl-3,4-dimethylpyridinium.

Specific examples of pyrrolidinium cations include 1,1-dimethylpyrrolidinium, 1-ethyl-1-methylpyrrolidinium, 1-methyl-1-propylpyrrolidinium,
1-methyl-1-butylpyrrolidinium, 1-methyl-1-pentylpyrrolidinium,
1-methyl-1-hexylpyrrolidinium, 1-methyl-1-heptylpyrrolidinium,
1-methyl-1-octylpyrrolidinium, 1-methyl-1-nonylpyrrolidinium,
1-methyl-1-decylpyrrolidinium, 1-methyl-1-methoxyethoxypyrrolidinium, 1-ethyl-1-propylpyrrolidinium, 1-ethyl-1-butylpyrrolidinium, 1-ethyl-1-pentylpyrrolidinium, 1-ethyl-1-hexylpyrrolidinium, 1-ethyl-1-heptylpyrrolidinium, 1,1-dipropylpyrrolidinium, 1-propyl-1-butylpyrrolidinium, 1,1-dibutylpyrrolidinium, pyrrolidinium-2-one.

Specific examples ofpiperidinium cations include 1-propylpiperidinium, 1-pentylpiperidinium, 1,1-dimethylpiperidinium, 1-methyl-1-ethylpiperidinium,
1-methyl-1-propylpiperidinium, 1-methyl-1-butylpiperidinium,
1-methyl-1-pentylpiperidinium, 1-methyl-1-hexylpiperidinium, 1-methyl-1-heptylpiperidinium, 1-methyl-1-octylpiperidinium, 1-methyl-1-decylpiperidinium, 1-methyl-1-methoxyethoxyethylpiperidinium, 1-ethyl-1-propylpiperidinium,
1-ethyl-1-butylpiperidinium, 1-ethyl-1-pentylpiperidinium, 1-ethyl-1-hexylpiperidinium, 1-ethyl-1-heptylpiperidinium, 1,1-dipropylpiperidinium, 1-propyl-1-butylpiperidinium, 1-propyl-1-pentylpiperidinium, 1-propyl-1-hexylpiperidinium, 1-propyl-1-heptylpiperidinium, 1,1-dibutylpiperidinium, 1-butyl-1-pentylpiperidinium, 1-butyl-1-hexylpiperidinium and
1-butyl-1-heptylpiperidinium.

Specific examples of cations having a pyrroline backbone include 2-methyl-1-pyrroline. Specific examples of cations having a pyrrole backbone include 1-ethyl-2-phenylindole, 1,2-dimethylindole and 1-ethylcarbazole.

Examples of cations represented by formula (B) include imidazolium cations, tetrahydropyrimidinium cations and dihydropyrimidinium cations.

Specific examples of imidazolium cations include 1,3-dimethylimidazolium, 1,3-diethylimidazolium, 1-methyl-3-ethylimidazolium, 1-methyl-3-hexylimidazolium, 1-ethyl-3-methylimidazolium, 1-propyl-3-methylimidazolium, 1-butyl-3-methylimidazolium, 1-pentyl-3-methylimidazolium, 1-hexyl-3-methylimidazolium,
1-heptyl-3-methylimidazolium, 1-octyl-3-methylimidazolium, 1-nonyl-3-methylimidazolium, 1-decyl-3-methylimidazolium, 1-dodecyl-3-methylimidazolium,
1-tetradecyl-3-methylimidazolium, 1-hexadecyl-3-methylimidazolium,
1-octadecyl-3-methylimidazolium, 1,2-dimethyl-3-propylimidazolium,
1-ethyl-2,3-dimethylimidazolium, 1-butyl-2,3-dimethylimidazolium, 1-hexyl-2,3-dimethylimidazolium and 1-(2-methoxyethyl)-3-methylimidazolium.

Specific examples of tetrahydropyrimidinium cations include 1,3-dimethyl-1,4,5,6-tetrahydropyrimidinium,
1,2,3-trimethyl-1,4,5,6-tetrahydropyrimidinium,
1,2,3,4-tetramethyl-1,4,5,6-tetrahydropyrimidinium and
1,2,3,5-tetramethyl-1,4,5,6-tetrahydropyrimidinium.

Specific examples of dihydropyrimidinium cations include 1,3-dimethyl-1,4-dihydropyrimidinium, 1,3-dimethyl-1,6-dihydropyrimidinium, 1,2,3-trimethyl-1,4-dihydropyrimidinium, 1,2,3-trimethyl-1,6-dihydropyrimidinium, 1,2,3,4-tetramethyl-1,4-dihydropyrimidinium and
1,2,3,4-tetramethyl-1,6-dihydropyrimidinium.

Examples of cations represented by formula (C) include pyrazolium cations and pyrazolinium cations.

Specific examples pyrazolium cations include 1-methylpyrazolium, 3-methylpyrazolium, 1-ethyl-2,3,5-trimethylpyrazolium, 1-propyl-2,3,5-trimethylpyrazolium, 1-butyl-2,3,5-trimethylpyrazolium and 1-(2-methoxyethyl)pyrazolium. Specific examples of pyrazolinium cations include 1-ethyl-2-methylpyrazolinium.

Examples of cations represented by formula (D) include cations in which Rₗ, Rₘ, Rₙ and Rₒ may be the same or different and all represent alkyl groups having 1 to 20 carbon atoms. Examples of these cations include tetraalkylammonium cations, trialkylsulfonium cations and tetraalkylphosphonium cations. Other examples of cations represented by formula (D) include those in which a portion of the above-mentioned alkyl groups are substituted with an alkenyl group, alkoxy group and/or epoxy group. In addition, one, two or more of Rₗ, Rₘ, Rₙ and Rₒ may also contain an aromatic ring or aliphatic ring.

Examples of cations represented by formula (D) may also be cations having a symmetrical structure or cations having an asymmetrical structure. Examples of ammonium cations having a symmetrical structure include tetraalkylammonium cations in which Rₗ, Rₘ, Rₙ and Rₒ represent the same alkyl group (such as any of a methyl group, ethyl group, propyl group, butyl group, pentyl group, hexyl group, heptyl group, octyl group, nonyl group, decyl group, dodecyl group, hexadecyl group or octadecyl group).

Typical examples of asymmetrical ammonium cations include tetraalkylammonium cations in which three of Rₗ, Rₘ, Rₙ and Rₒ are the same while the remaining group is different, specific examples of which include asymmetrical tetraalkyl ammonium cations such as trimethylethylammonium, trimethylpropylammonium, trimethylbutylammonium, trimethylpentylammonium, trimethylhexylammonium, trimethylheptylammonium, trimethyloctylammonium, trimethylnonylammonium, trimethyldecylammonium, triethylmethylammonium, triethylpropylammonium, triethylbutylammonium, triethylpentylammonium, triethylhexylammonium, triethylheptylammonium, triethyloctylammonium, triethylnonylammonium, triethyldecylammonium, tripropylmethylammonium, tripropylethylammonium, tripropylbutylammonium, tripropylpentylammonium, tripropylhexylammonium, tripropylheptylammonium, tripropyloctylammonium, tripropylnonylammonium, tripropyldecylammonium, tributylmethylammonium, tributylethylammonium, tributylpropylammonium, tributylpentylammonium, tributylhexylammonium, tributylheptylammonium, tripentylmethylammonium, tripentylethylammonium, tripentylpropylammonium, tripentylbutylammonium, tripentylhexylammonium, tripentylheptylammonium, trihexylmethylammonium, trihexylethylammonium, trihexylpropylammonium, trihexylbutylammonium, trihexylpentylammonium, trihexylheptylammonium, triheptylmethylammonium, triheptylethylammonium, triheptylpropylammonium, triheptylbutylammonium, triheptylpentylammonium, triheptylhexylammonium, triocylmethylammonium, triocylethylammonium, trioctylpropylammonium, trioctylbutylammonium, trioctylpentylammonium, trioctylhexylammonium, trioctylheptylammonium, trioctyldodecylammonium, trioctylhexadecylammonium, trioctyloctadecylammonium, trinonylmethylammonium and tridecylmethylammonium.

Other examples of asymmetrical ammonium cations include tetraalkylammonium cations such as dimethyldiethylammonium, dimethyldipropylammonium, dimethyldibutylammonium, dimethyldipentylammonium, dimethyldihexylammonium, dimethyldiheptylammonium, dimethyldioctylammonium, dimethyldinonylammonium, dimethyldidecylammonium, dipropyldiethylammonium, dipropyldibutylammonium, dipropyldipentylammonium, dipropyldihexylammonium, dimethylethylpropylammonium, dimethylethylbutylammonium, dimethylethylpentylammonium,
dimethylethylhexylammonium, dimethylethylheptylammonium,
dimethylethylnonylammonium, dimethylpropylbutylammonium,
dimethylpropylpentylammonium, dimethylpropylhexylammonium,

dimethylpropylheptylammonium, dimethylbutylhexylammonium,
dimethylbutylheptylammonium, dimethylpentylhexylammonium,
dimethylhexylheptylammonium, diethylmethylpropylammonium,
diethylmethylpentylammonium, diethylmethylheptylammonium,

diethylpropylpentylammonium, dipropylmethylethylammonium,
dipropylmethylpentylammonium, dipropylbutylhexylammonium,
dibutylmethylpentylammonium, dibutylmethylhexylammonium, methylethylpropylbutylammonium, methylethylpropylpentylammonium and methylethylpropylhexylammonium, ammonium cations containing a cycloalkyl group such as trimethylcyclohexylammonium, ammonium cations containing an alkenyl group such as diallyldimethylammonium, diallyldipropylammonium, diallylmethylhexylammonium and diallylmethyloctylammonium, ammonium cations containing an alkoxy group such as triethyl(methoxyethoxyethyl)ammonium, dimethylethyl(methoxyethoxyethyl)ammonium, dimethylethyl(ethoxyethoxyethyl)ammonium, diethylmethyl(2-methoxyethyl)ammonium and diethylmethyl(methoxyethoxyethyl)ammonium, and ammonium cations containing an epoxy group such as glycidyltrimethylammonium.

Examples of sulfonium cations having a symmetrical structure include trialkylsulfonium cations in which Rₗ, Rₘ, and Rₙ represent the same alkyl group (such as any of a methyl group, ethyl group, propyl group, butyl group and hexyl group). Examples of asymmetrical sulfonium cations include asymmetrical trialkylsulfonium cations such as dimethyldecylsulfonium, diethylmethylsulfonium and dibutylethylsulfonium.

Examples of phosphonium cations having a symmetrical structure include tetraalkylphosphonium cations in which Rₗ, Rₘ, Rₙ and Rₒ represent the same alkyl group (such as any of a methyl group, ethyl group, butyl group, pentyl group, hexyl group, heptyl group, octyl group, nonyl group and decyl group). Examples of asymmetrical phosphonium cations include tetraalkylphosphonium cations in which three of Rₗ, Rₘ, Rₙ and Rₒ are the same while the remaining group is different, specific examples of which include trimethylpentylphosphonium, trimethylhexylphosphonium, trimethylheptylphosphonium, trimethyloctylphosphonium, trimethylnonylphosphonium, trimethyldecylphosphonium, triethylmethylphosphonium, tributylethylphosphonium, tripentylmethylphosphonium, trihexylmethylphosphonium, triheptylmethylphosphonium, trioctylmethylphosphonium, trinonylmethylphosphonium and tridecylmethylphosphonium. Other examples of asymmetrical phosphonium cations include asymmetrical tetraalkylphosphonium cations such as trihexyltetradecylphosphonium, dimethyldipentylphosphonium, dimethyldihexylphosphonium, dimethyldiheptylphosphonium, dimethyldioctylphosphonium, dimethyldinonylphosphonium and dimethyldidecylphosphonium, and phosphonium cations containing an alkoxy group such as trimethyl(methoxyethoxyethyl)phosphonium, dimethylethyl(methoxyethoxyethyl)phosphonium and
tributyl-(2-methoxyethyl)phosphonium.

Preferable examples of cations represented by formula (D) include the asymmetrical tetraalkylammonium cations, asymmetrical trialkylsulfonium cations and asymmetrical tetraalkylphosphonium cations described above.

Examples of cations represented by formula (E) include sulfonium cations in which Rₚ is any alkyl group having 1 to 18 carbon atoms. Specific examples of Rₚ include a methyl group, ethyl group, propyl group, butyl group, hexyl group, octyl group, nonyl group, decyl group, dodecyl group, tridecyl group, tetradecyl group and octadecyl group.

There are no particular limitations on the anionic component of the above-mentioned ionic liquid provided a salt thereof with any of the cations disclosed herein can become an ionic liquid. Specific examples include Cl⁻, Br⁻, I⁻, AlCl₄⁻, Al₂Cl₇⁻, BF₄⁻, PF₆⁻, ClO₄⁻, NO₃⁻, CH₃COO⁻, CF₃COO⁻, CH₃SO₃⁻, CF₃SO₃⁻, (CF₃SO₂)₂N⁻, (CF₃SO₂)₃C⁻, AsF₆⁻, SbF₆⁻, NbF₆⁻, TaF₆⁻, F(HF)ₙ⁻, (CN)₂N⁻, C₄F₉SO₃⁻, (C₂F₂SO₂)₂N⁻, C₃F₇COO⁻, (CF₃SO₂)(CF₃CO)N⁻, C₉H₁₉COO⁻, (CH₃)₂PO₄⁻, (C₂H₅)₂PO4⁻, C₂H₅OSO₃⁻, C₆H₁₃OSO₃⁻, C₈H₁₇OSO₃⁻, CH₃(OC₂H₄)₂OSO₃⁻, C₆H₄(CH₃)SO₃⁻, (C₂F₅)₃PF₃⁻, CH₃CH(OH)COO⁻ and anions represented by the following formula (F).

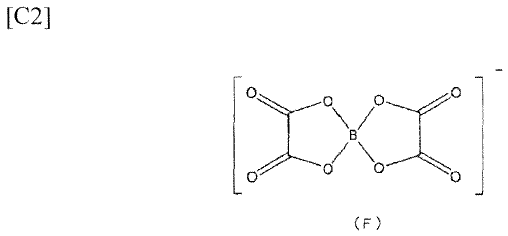

In particular, a hydrophilic anionic component tends to be resistant to bleeding onto the PSA surface, and is used preferably from the viewpoint of having a low degree of pollution. In addition, anionic components containing a fluorine atom (such as an anionic component containing a perfluoroalkyl group) are used preferably since they allow the obtaining of an ionic compound having a low melting point. Preferable examples of these anionic components include fluorine-containing anions such as bis(perfluoroalkylsulfonyl)imide anions (such as (CF₃SO₂)₂N⁻ or (C₂F₅SO₂)₂N⁻) and perfluoroalkylsulfonium anions (such as CF₃SO₃⁻). Normally, the number of carbon atoms of the perfluoroalkyl group is preferably 1 to 3 and particularly preferably 1 or 2.

The ionic liquid used in the technology disclosed herein can be a suitable combination of the above-mentioned cationic components and anionic components. For example, in the case the cationic component is a pyridinium cation, specific examples of combinations with the above-mentioned anionic components include 1-butylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate and 1-allylpyridinium bis(trifluoromethanesulfonyl)imide. Similar to the above-mentioned other cations as well, an ionic liquid can be used consisting of a combination of any of the anionic components disclosed herein.

A commercially available ionic liquid can be used for this ionic liquid. Alternatively, an ionic liquid can easily be synthesized according to a known method. There are no particular limitations on the method used to synthesize the ionic liquid provided that the target ionic liquid is able to be obtained. In general, a halide method, hydroxide method, acid ester method, complex formation method, neutralization method and the like is used as described in the known literature, "Ionic Liquids - Front Line of Development and Future Outlook" (CMC Publishing Co., Ltd.). In addition, a method for synthesizing an ionic liquid is also described in the previously described Japanese Patent Application Publication No. 2006-291172.

Normally, the amount of ionic liquid is suitably within the range of 0.01 parts by weight to 10 parts by weight based on 100 parts by weight of the acrylic polymer, and is preferably 0.02 parts by weight to 5 parts by weight and more preferably 0.03 parts by weight to 3 parts by weight. The amount of the ionic liquid may also be 0.04 parts by weight to 2 parts by weight or 0.05 parts by weight to 1 part by weight. If the amount of the ionic liquid is excessively low, adequate antistatic properties are unable to be obtained, while if the amount is excessively high, the adherend tends to be polluted easily.

<Ionic Compound (Alkaline Metal Salt)>
Typical examples of the alkaline metal salt include lithium salts, sodium salts and potassium salts. For example, a metal salt comprising (typically, composed of) Li⁺, Na⁺ or K⁺ for the cationic component and Cl⁻, Br⁻, I⁻, BF₄⁻, PF₆⁻, SCN⁻, ClO₄⁻, CF₃SO₃⁻, (CF₃SO₂)₂N⁻, (C₂F₅SO₂)₂N⁻ or (CF₃SO₂)₃C⁻ for the anionic component can be used. The use of a lithium salt is preferable due to its high dissociation. Preferable specific examples of lithium salts include LiBr, LiI, LiBF₄, LiPF₆, LiSCN, LiClO₄, LiCF₃SO₃, Li(CF₃SO₂)₂N, Li(C₂F₅SO₂)₂N and Li(CF₃SO₂)₃C. A lithium salt in which the anionic component is a fluorine-containing anion such as bis(perfluoroalkylsulfonyl)imide anion or perfluoroalkylsulfonium anion (such as Li(CF₃SO₂)₂N, Li(C₂F₅SO₂)₂N and LiCF₃SO₃) is particularly preferable. One type of these alkaline metal salts may be used alone or two or more types may be used in combination.

Normally, the amount of the alkaline metal salt to 100 parts by weight of the acrylic polymer is suitably less than 1 part by weight, preferably 0.01 parts by weight to 0.8 parts by weight and more preferably 0.01 parts by weight to 0.5 parts by weight. If the amount of the alkaline metal salt is excessively low, there are cases in which adequate antistatic performance is unable to be obtained. On the other hand, if the amount of the alkaline metal salt is excessively high, pollution of the adherend tends to occur easily.

<Acrylic Polymer>
Next, an explanation is provided of acrylic polymer serving as the base polymer (main component among polymer components, namely a component that accounts for 50% by weight or more of the polymer components) of the PSA layer disclosed herein.

Typically, the acrylic polymer is a polymer having an alkyl (meth)acrylate for the main constituent monomer component thereof. A compound represented by the following formula (1), for example, can be preferably used for the alkyl (meth)acrylate.

CH₂=C(R¹)COOR² (1)

Here, in the above formula (1), R¹ represents a hydrogen atom or a methyl group. R² represents an alkyl group having 1 to 20 carbon atoms. In order to easily obtain a PSA having excellent adhesiveness characteristics, an alkyl (meth)acrylate in which R² is an alkyl group having 2 to 14 carbon atoms (hereinafter the range of the number of carbon atoms may be represented as C₂₋₁₄) is preferable. Specific examples of C₂₋₁₄ alkyl groups include a methyl group, ethyl group, propyl group, isopropyl group, n-butyl group, isobutyl group, s-butyl group, t-butyl group, n-pentyl group, isoamyl group, neopentyl group, n-hexyl group, n-heptyl group, n-octyl group, isooctyl group, 2-ethylhexyl group, n-nonyl group, isononyl group, n-decyl group, isodecyl group, n-undecyl group, n-dodecyl group, n-tridecyl group and n-tetradecyl group.

In a preferable aspect, one species or two or more species selected from alkyl (meth)acrylates in which R² in the formula 1 represents a C₂₋₁₄ alkyl group preferably account for roughly 50% by weight or more (typically 50 to 99.9% by weight), more preferably 70% by weight or more (typically 70 to 99.9% by weight), and for example, about 85% by weight or more (typically 85 to 99.9% by weight), of the total amount of the monomer used to synthesize the acrylic polymer. An acrylic polymer obtained from such a monomer composition is preferable in that it facilitates the formation of a PSA that exhibits favorable adhesiveness characteristics.

An acrylic polymer obtained by copolymerizing an acrylic monomer having a hydroxyl group (-OH) can be preferably used for the acrylic polymer in the techniques disclosed herein. Specific examples of acrylic monomers having a hydroxyl group include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 2-hydroxyheyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, polypropylene glycol mono(meth)acrylate, N-hydroxyethyl (meth)acrylamide and N-hydroxypropyl (meth)acrylamide. One of these hydroxyl group-containing acrylic monomers may be used alone or two or more species may be used in combination. An acrylic polymer obtained by copolymerizing these monomers is preferable since it facilitates the imparting of a PSA preferable for a surface protective film. For example, since such a polymer is able to easily control peeling force to an adherend to a low level, a PSA having superior repeelability is easily obtained. Particularly preferable examples of hydroxyl group-containing acrylic monomers include (meth)acrylates containing a hydroxyl group such as 2-hydroxyethyl (meth)acrylate, 2-hydroxypropyl (meth)acrylate, 3-hydroxypropyl (meth)acrylate, 2-hydroxybutyl (meth)acrylate and 4-hydroxybutyl (meth)acrylate.

This hydroxyl group-containing acrylic monomer is preferably used within a range of roughly 0.1 to 15% by weight, more preferably within a range of roughly 0.2 to 10% by weight and particularly preferably within a range of roughly 0.3 to 8% by weight of the total amount of monomer used to synthesize the acrylic polymer. If the content of the hydroxyl group-containing acrylic monomer is excessively greater than the above ranges, the cohesive strength of the PSA becomes excessively large, fluidity (creep ability) decreases and wettability (adhesiveness) to the adherend tends to decrease. On the other hand, if the content of the hydroxyl group-containing acrylic monomer is excessively less than the above ranges, it may become difficult to adequately demonstrate the effect of using the monomer.

From the viewpoint of easily obtaining balance among adhesive performance, normally an acrylic polymer having a glass transition temperature (Tg) of roughly 0°C or lower (typically, -100°C to 0°C) is used for the acrylic polymer in the techniques disclosed herein. An acrylic polymer having a Tg within the range of roughly -80°C to -5°C is more preferable. If the value of Tg is excessively higher than the above ranges, initial adhesiveness during use in the vicinity of normal temperatures easily becomes inadequate, and workability of adhering a protective film may decrease. The Tg of the acrylic polymer can be adjusted by suitably modifying the monomer composition of (namely, the types and ratios of the amounts used of the monomers used to synthesize the polymer).

Monomers other than those described above (other monomers) may also be copolymerized in the acrylic polymer in the techniques disclosed herein within a range that does not remarkably impair the effects of the present invention. Such monomers can be used for the purpose of, for example, adjusting Tg of the acrylic polymer or adjusting adhesive performance (such as peelability). For example, examples of monomers able to improve cohesive strength and heat resistance of a PSA include sulfonic acid group-containing monomers, phosphoric acid group-containing monomers, cyano group-containing monomers, vinyl esters and aromatic vinyl compounds. In addition, examples of monomers that can introduce a functional group into the acrylic polymer that can become a crosslinking site or contribute to improvement of adhesiveness include carboxyl group-containing monomers, acid anhydride group-containing monomers, amido group-containing monomers, amino group-containing monomers, imido group-containing monomers, epoxy group-containing monomers, (meth)acryloylmorpholine and vinyl ethers.

Examples of sulfonic acid group-containing monomers include styrene sulfonic acid, allyl sulfonic acid, 2-(meth)acrylamido-2- methylpropanesulfonic acid, (meth)acrylamidopropanesulfonic acid, sulfopropyl (meth)acrylate,
(meth)acryloxynaphthalene sulfonic acid and sodium vinylsulfonate. Examples of phosphoric acid group-containing monomers include 2-hydroxyethyl acryloyl phosphate. Examples of cyano group-containing monomers include acrylonitrile and methacrylonitrile. Examples of vinyl esters include vinyl acetate, vinyl propionate and vinyl laurate.
Examples of aromatic vinyl compounds include styrene, chlorostyrene, chloromethylstyrene, α-methylstyrene and other substituted styrenes.

Examples of carboxyl group-containing monomers include (meth)acrylic acid, carboxyethyl (meth)acrylate, carboxypentyl (meth)acrylate, itaconic acid, maleic acid, fumaric acid, crotonic acid and isocrotonic acid. Examples of acid anhydride group-containing monomers include maleic anhydride, itaconic anhydride and acid anhydride forms of the previously listed carboxyl group-containing monomers. Examples of amido group-containing monomers include acrylamide, methacrylamide, diethylacrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropyl methacrylamide and diacetone acrylamide. Examples of amino group-containing monomers include aminoethyl (meth)acrylate, N,N-dimethylaminoethyl (meth)acrylate and N,N-dimethylaminopropyl (meth)acrylate. Examples of imido group-containing monomers include cyclohexylmaleimide, isopropylmaleimide, N-cyclohexylmaleimide and itaconimide. Examples of epoxy group-containing monomers include glycidyl (meth)acrylate, methylglycidyl (meth)acrylate and allyl glycidyl ether. Examples of vinyl ethers include methyl vinyl ether, ethyl vinyl ether and isobutyl vinyl ether.

Although one of the "other monomers" may be used alone or two or more species may be used in combination, the total content thereof among the monomers used to synthesize the acrylic polymer is preferably roughly 40% by weight or less (and typically, 0.001 to 40% by weight), and more preferably roughly 30% by weight or less (and typically, 0.001 to 30% by weight). Also, the acrylic polymer may have a composition that does not contain the other monomers (such as that obtained by using only C₆₋₁₄ alkyl (meth)acrylate as monomer, or that obtained by using only C₆₋₁₄ alkyl (meth)acrylate and hydroxyl group-containing (meth)acrylate).

In the case of using a monomer having a functional group such as a carboxyl group, sulfonic acid group or phosphoric acid group (such as an acrylic monomer having these acidic functional groups) for the other monomers described above, these monomers are preferably used such that the acid value of the acrylic polymer is at a limit of 29 mg KOH/g or less (more preferably 16 mg KOH/g or less, even more preferably 8 mg KOH/g or less and particularly preferably 4 mg KOH/g or less). As a result thereof, a phenomenon in which adhesiveness (and going even further, peeling force from an adherend) of a protective film adhered to an adherend increases over time can be suppressed and favorable repeelability can be maintained. The acid value of the acrylic polymer can be adjusted according the amount used of a monomer having an acidic functional group (namely, by adjusting the monomer composition). For example, in the case of an acrylic polymer obtained by using only 2-ethylhexylacrylate and acrylic acid as monomers, an acrylic polymer that satisfies an acid value of 29 mg KOH/g or less can be obtained by making the amount of acrylic acid in a total of 100 parts by weight of these monomers 3.7 parts by weight or less.

The weight average molecular weight of the acrylic polymer in the techniques disclosed herein is preferably within the range of 10 × 10⁴ to 500 × 10⁴, more preferably within the range of 20 × 10⁴ to 400 × 10⁴, and even more preferably within the range of 30 × 10⁴ to 300 × 10⁴. Here, Mw refers to the value obtained by gel permeation chromatography (GPC) based on standard polystyrene. If the Mw is excessively below the above ranges, the cohesive strength of the PSA becomes inadequate, and PSA may easily remain on the surface of an adherend. If the Mw is excessively above the above ranges, the fluidity of the PSA decreases and wettability (adhesiveness) to the adherend may easily become inadequate. This shortage of wettability can cause the occurrence of a phenomenon by which the PSA sheet adhered to the adherend separates from the adherend during the course of use (for example, unintentionally separates at a stage where the PSA sheet is desired to continue to demonstrate a protective function as in the case of a surface protective film).

There are no particular limitations on the method used to obtain the acrylic polymer having this monomer composition, and the polymer can be obtained by applying various types of polymerization methods commonly used as techniques for synthesizing acrylic polymers, examples of which include solution polymerization, emulsion polymerization, bulk polymerization and suspension polymerization. In addition, the acrylic polymer may be a random copolymer, block copolymer or graft copolymer. A random copolymer is normally preferable from the viewpoints of productivity and the like.

<(Poly)alkylene Oxide Chain>
In a preferable aspect of the technology disclosed herein, the PSA layer contains a (poly)alkylene oxide chain. A PSA layer having this composition can be made to have more superior pollution resistance. Although the reason for this is not necessarily clear, it is possible that, for example, bleeding of the antistatic component is inhibited by the presence of a (poly)alkylene oxide chain. The (poly)alkylene oxide chain can be contained in the form of, for example, a (poly)alkylene oxide chain-containing monomer copolymerized in the acrylic polymer. Alternatively, it may also be contained in the form of a (poly)alkylene oxide compound mixed in (subsequently added to) the acrylic polymer.

A (poly)alkylene oxide compound can be used for the (poly)alkylene oxide chain-containing monomer that has an oxyalkylene unit ((poly)alkylene oxide chain) and a functional group able to copolymerize with an acrylic monomer (such as an acryloyl group, methacryloyl group, allyl group and vinyl group) in a molecule thereof. Here, a (poly)alkylene oxide compound refers to a concept that includes alkylene oxide compounds in which the number of repeating oxyalkylene units is 1 and polyalkylene oxide compounds having a moiety consisting of two or more consecutive repeating oxyalkylene units (namely, compounds in which the number of repeating oxyalkylene units is 2 or more). This (poly)alkylene oxide chain-containing monomer can also be that referred to as a reactive surfactant. The number of carbon atoms of the alkylene group contained in the oxyalkylene unit can be, for example, 1 to 6. This alkylene group may be linear or branched. Preferable examples of this alkylene group include an oxymethylene group, oxyethylene group, oxypropylene group and oxybutylene group.

In a preferable aspect, the (poly)alkylene oxide chain-containing monomer is a monomer having a (poly)ethylene oxide chain. It may also be a monomer containing a (poly)ethylene oxide chain in a portion of a (poly)alkylene oxide chain. The use of an acrylic polymer in which the above-mentioned monomer is copolymerized as a base polymer improves compatibility between the base polymer and the antistatic component, and allows the obtaining of a PSA composition having a low degree of pollution in which bleeding to the adherend is preferably inhibited.

The average number of added moles of the oxyalkylene unit in the (poly)alkylene oxide chain-containing monomer (number of repetitions) is preferably 1 to 50 and a more preferably 2 to 40 from the viewpoint of compatibility with the antistatic component. By copolymerizing a (poly)alkylene oxide chain-containing monomer in which the number of added moles is 1 or more, the effect of improving low pollution can be demonstrated efficiently. If the number of added moles is greater than 50, interaction with the antistatic component becomes excessively great, resulting in impairment of ion conduction that tends to cause a decrease in antistatic performance. Furthermore, the terminals of the oxyalkylene chain may remain as hydroxyl groups or may be substituted with other functional groups and the like.

Specific examples of monomers having a (meth)acryloyl group and (poly)alkylene oxide chain in a molecule thereof include polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxy polyethylene glycol (meth)acrylate, ethoxy polyethylene glycol (meth)acrylate, butoxy polyethylene glycol (meth)acrylate, octoxy polyethylene glycol (meth)acrylate, lauroxy polyethylene glycol (meth)acrylate, stearoxy polyethylene glycol (meth)acrylate, phenoxy polyethylene glycol (meth)acrylate, methoxy polypropylene glycol (meth)acrylate and octoxy polyethylene glycol-polypropylene glycol (meth)acrylate.

In addition, examples of the reactive surfactant include anionic reactive surfactants, nonionic reactive surfactants and cationic reactive surfactants having the polymerizable functional group (such as an acryloyl group, methacryloyl group, allyl group and vinyl group) and a (poly)alkylene oxide chain in a molecule thereof.

Specific examples of commercially available products able to be used for the (poly)alkylene oxide chain-containing monomer disclosed herein include "Blenmer PME-400", "Blenmer PME-1000" and "Blenmer 50POEP-800B" manufactured by NOF Corp., "Latemul PD-420" and "Latemul PD-430" manufactured by Kao Corp., and "Adeka Reasoap ER-10" and "Adeka Reasoap NE-10" manufactured by Adeka Corp.

Although one type of the (poly)alkylene oxide chain-containing monomer may be used alone or two or more types may be used in combination, the amount used overall is preferably 40% by weight or less, more preferably 30% by weight or less and even more preferably 20% by weight or less of the total amount of monomer used to synthesize the acrylic polymer. If the amount of the (poly)alkylene oxide chain-containing monomer exceeds 40% by weight, interaction with the antistatic component becomes excessively great, resulting in impairment of ion conduction that can cause a decrease in antistatic performance.

Various types of (poly)alkylene oxide compounds in which the number of carbon atoms of the alkylene group contained in the oxyalkylene unit is 1 to 6 (preferably 1 to 4 and more preferably 2 to 4), for example, can be used for the (poly)alkylene oxide compound mixed (subsequently added) to the acrylic polymer. The alkylene group may be linear or branched. The average number of moles added (number of repetitions) of the oxyalkylene unit is preferably 1 to 50 and more preferably 1 to 40 from the viewpoint of compatibility with the antistatic agent.

Specific examples of (poly)alkylene oxide compounds include nonionic surfactants such as polyoxyalkylene alkyl amines, polyoxyalkylene diamines, polyoxyalkylene fatty acid esters, polyoxyalkylene sorbitan fatty acid esters, polyoxyalkylene alkyl phenyl ethers, polyoxyalkylene alkyl ethers, polyoxyalkylene alkyl allyl ethers and polyoxyalkylene alkyl phenyl allyl ethers, anionic surfactants such as polyoxyalkylene alkyl ether sulfate ester salts, polyoxyalkylene alkyl ether phosphate ester salts, polyoxyalkylene alkyl phenyl ether sulfate ester salts and polyoxyalkylene alkyl phenyl ether phosphate ester salts, cationic surfactants and amphoteric surfactants having a polyalkylene oxide chain, polyether esters and derivatives thereof having a polyalkylene oxide chain and polyoxyalkylene-modified silicone. In addition, the (poly)alkylene oxide chain-containing monomer may also be mixed in the acrylic polymer as a (poly)alkylene oxide chain-containing compound. One type of this (poly)alkylene oxide chain-containing compound may be used alone or two or more types may be used in combination.

A preferable example of the (poly)alkylene oxide compound is a polyether ester containing a (poly)alkylene oxide chain. Specific examples of this polyether ester include polypropylene glycol (PPG)-polyethylene glycol (PEG) block copolymers, PPG-PEG-PPG block copolymers and PEG-PPG-PEG block copolymers. Examples of derivatives of the (poly)alkylene oxide compound include oxypropylene group-containing compounds in which the terminals thereof have been etherified (such as PPG monoalkyl ether or PEG-PPG monoalkyl ether), and oxypropylene group-containing compounds in which the terminals thereof have been acetylated (such as terminally acetylated PPG).

Other preferable examples of the (poly)alkylene oxide compound include nonionic surfactants having a (poly)alkylene oxide group (which can also be reactive surfactants). Examples of commercially available products of these nonionic surfactants include "Adeka Reasoap NE-10", "Adeka Reasoap SE-20N", "Adeka Reasoap ER-10" and "Adeka Reasoap SR-10" manufactured by Adeka Corp., "Latemul PD-420", "Latemul PD-430", "Emulgen 120" and "Emulgen A-90" manufactured by Kao Corp., "Newcol 1008" manufactured by Nippon Nyukazai Co., Ltd., and "Noigen XL-100" manufactured by Dai-Ichi Kogyo Seiyaku Co., Ltd.

In a preferable aspect, the (poly)alkylene oxide compound is a compound that has a (poly)ethylene oxide chain in at least a portion thereof. Mixing of this compound ((poly)ethylene oxide chain-containing compound) improves compatibility between the base polymer and the antistatic component, and allows the obtaining of a PSA composition having a low degree of pollution in which bleeding to the adherend is preferably inhibited. In the (poly)ethylene oxide chain-containing compound, the (poly)ethylene oxide chain preferably accounts for 5% by weight to 85% by weight, more preferably 5% by weight to 80% by weight, and even more preferably 5% by weight to 75% by weight of the entire compound.

With respect to the molecular weight of the (poly)alkylene oxide compound, the number average molecular weight (Mn) is suitably 10,000 or less, and normally that having a Mn of 200 to 5,000 is used preferably. If the Mn exceeds 10,000, compatibility with the acrylic polymer decreases and tends to make the PSA layer susceptible to whitening. If the Mn is less than 200, there can be increased likelihood of the occurrence of pollution attributable to the (poly)alkylene oxide compound. Furthermore, Mn here refers to the value obtained by gel permeation chromatography (GPC) based on standard polystyrene.

The amount of the (poly)alkylene oxide compound can be, for example, 0.01 parts by weight to 40 parts by weight based on 100 parts by weight of the acrylic polymer, and is preferably 0.05 parts by weight to 30 parts by weight and more preferably 0.1 parts by weight to 20 parts by weight. If the amount is excessively low, the effect of preventing bleeding of the antistatic component decreases, while if the amount is excessively high, pollution attributable to the (poly)alkylene oxide compound can occur easily.

<PSA Composition>
The PSA layer in the technology disclosed herein can be formed by using a PSA composition in which a PSA layer forming component containing at least the acrylic polymer and the ionic compound is contained in a liquid medium mainly comprising water (such as an aqueous emulsion), a PSA composition in which the PSA layer forming component is contained in a liquid medium mainly comprising an organic solvent (such as an organic solvent solution), or a PSA composition that does not substantially contain this liquid medium (solvent-free). Typically, the PSA composition is configured so as to be able to suitably crosslink the acrylic polymer contained in the PSA composition. As a result of this crosslinking, a PSA layer can be formed that demonstrates preferable performance for use as a surface protective film. As an example of specific crosslinking means, a method can be preferably employed in which crosslinking base points are introduced into the acrylic polymer by copolymerizing a monomer having a suitable functional group (such as a hydroxyl group and carboxyl group) and reacting a compound able to form a crosslinked structure by reacting with that functional group (crosslinking agent) by adding to the acrylic polymer. Various types of materials used to crosslink ordinary acrylic polymers can be used for the crosslinking agent, such as an isocyanate compound, epoxy compound, melamine-based compound and aziridine compound. One type of these crosslinking agents may be used alone or two or more types may be used in combination.

An isocyanate compound is used particularly preferably for the crosslinking agent since it facilitates adjustment of peel strength from the adherend to within a suitable range. Examples of this isocyanate compound include aromatic isocyanates such as tolylene diisocyanate and xylylene diisocyanate, alicyclic isocyanates such as isophorone diisocyanate, and aliphatic isocyanates such as hexamethylene diisocyanate. Specific examples include lower aliphatic polyisocyanates such as butylene diisocyanate and hexamethylene diisocyanate, alicyclic isocyanates such as cyclopentylene diisocyanate, cyclohexylene diisocyanate and isophorone diisocyanate, aromatic diisocyanates such as 2,4-tolylene diisocyanate, 4,4'-diphenylmethane diisocyanate and xylylene diisocyanate, and isocyanate adducts such as trimethylolpropane/tolylene diisocyanate trimer adduct (trade name: "Coronate L" manufactured by Nippon Polyurethane Industry Co., Ltd.), trimethylolpropane/hexamethylene diisocayante trimer adduct (trade name: "Coronate HL" manufactured by Nippon Polyurethane Industry Co., Ltd.), and an isocyanurate form of hexamethylene diisocyanate (trade name: "Coronate HX" manufactured by Nippon Polyurethane Industry Co., Ltd.). One type of these isocyanate compounds may be used alone or two or more types may be used in combination.

In addition, examples of epoxy compounds used as crosslinking agents include N,N,N',N'-tetraglycidyl-m-xylene diamine (trade name: "Tetrad-X" manufactured by Mitsubishi Gas Chemical Inc.), and 1,3-bis(N,N-diglycidylaminomethyl)cyclohexane (trade name: "Tetrad-C" manufactured by Mitsubishi Gas Chemical Inc.). Examples of melamine-based resins include hexamethylol melamine. Examples of aziridine derivatives include the commercially available products of "HDU", "TAZM" and "TAZO" manufactured by Sogo Pharmaceutical Co., Ltd.

The amount of crosslinking agent used can be suitably selected corresponding to the composition and structure of the acrylic polymer (such as the molecular weight thereof), the manner of use of the PSA sheet (such as a surface protective film) and the like. Normally, the amount of crosslinking agent used based on 100 parts by weight of the acrylic polymer is suitably roughly 0.01 parts by weight to 15 parts by weight, and is preferably about 0.1 parts by weight to 10 parts by weight (for example, roughly 0.2 parts by weight to 2 parts by weight). If the amount of crosslinking agent is excessively low, the cohesive strength of the PSA becomes inadequate and residual adhesive may remain on the adherend. On the other hand, if the amount of crosslinking agent used is excessively high, the cohesive strength of the PSA becomes excessively high, fluidity decreases, and this may cause peeling due to insufficient wettability to the adherend.

Various types of conventionally known additives can be further mixed as necessary in the PSA composition. Examples of such additives include surface lubricants, leveling agents, antioxidants, preservatives, photostabilizers, ultraviolet absorbers, polymerization inhibitors and silane coupling agents. In addition, a known and/or commonly used tackifier resin may also be mixed in a PSA composition in which a base polymer is an acrylic polymer.

<PSA Layer Formation Method>
The PSA layer in the technology disclosed herein can be formed by a method comprising directly applying a PSA composition as described above to a second side of a substrate film (which may be a substrate film provided with an antistatic layer in which an antistatic layer is preliminarily formed on a first side, or may be a substrate film prior to formation of the antistatic layer) followed by drying or curing (direct method).
Alternatively, the PSA layer may be formed by a method comprising applying the PSA composition to the surface of a release liner (release surface), forming a PSA layer on the surface thereof by drying or curing, and then transferring the PSA layer to a substrate film by laminating the PSA layer to the substrate film (transfer method). From the viewpoint of the anchoring property of the PSA layer, the direct method can be preferably employed in general. When applying (and typically, coating) the PSA composition, various types of methods conventionally known in the field of PSA sheets can be suitably employed, examples of which include coating methods such as roll coating, gravure coating, reverse coating, roll brush coating, spray coating, air knife coating and die coating. Drying of the PSA composition can be carried out while heating as necessary (such as by heating to about 60°C to 150°C). Ultraviolet rays, laser rays, α-rays, β-ray, γ-rays, X-rays and an electron beam can be suitably employed for the means of curing the PSA composition. Although there are no particular limitations thereon, the thickness of the PSA layer can be, for example, roughly 3 µm to 100 µm and normally is preferably roughly 5 µm to 50 µm.

The PSA sheet disclosed herein can be provided in a form in which a release liner is laminated to a PSA surface (in the form of a PSA sheet with release liner) for the purpose of protecting the PSA surface (surface of the PSA layer on the side adhered to an adherend). Paper or a synthetic resin film and the like can be used for the substrate that configures the release liner, and a synthetic resin film is used preferably from the viewpoint of superior surface smoothness. For example, various types of resin films (for example, a polyester film) can be preferably used as the substrate of the release liner. The thickness of the release liner can be, for example, roughly 5 µm to 200 µm, and is preferably roughly 10 µm to 100 µm in general. The side of the release liner that is adhered to the PSA layer may be subjected mold release or pollution prevention treatment using a conventionally known mold release agent (such as a silicone-based, fluorine-based, long chain alkyl-based and fatty acid amide-based agent) or silica powder and the like.

<Performance of PSA Sheet>
A PSA sheet according to a preferable aspect demonstrates antistatic performance such that peeling static voltage as measured according to the method described in the examples to be subsequently described is within ±1 kV (more preferably within ±0.8 kV and even more preferably within ±0.7 kV) on both the adherend (polarizing plate) side and PSA sheet side in a measuring environment at 23°C and 50% RH. A PSA sheet according to a more preferable aspect demonstrates antistatic performance such that peeling static voltage as measured according to the method described in the examples to be subsequently described is within ±1 kV (more preferably within ±0.8 kV and even more preferably within ±0.7 kV) on both the adherend side and PSA sheet side in a measuring environment at 23°C and 25% RH. A surface protective sheet is preferable in which peeling static voltage on at least the PSA sheet side is within ±0.1 kV at both 50% RH and 25% RH. In addition, in a pollution evaluation carried out according to the method described in the examples to be subsequently described, a PSA sheet is preferable in which the level of pollution is S or G. In addition, in an evaluation of scratch resistance carried out according to the method described in the examples to be subsequently described, a PSA sheet is preferable that has an acceptable level of scratch resistance.

EXAMPLES
Several experimental examples relating to the present invention are described below, although these specific examples are not intended to limit the scope of the invention. In the description that follows, unless noted otherwise, all references to "parts" and "%" are based on weight.

Each of the characteristics described in the following explanation were respectively measured or evaluated as indicated below.
<Measurement of Glass Transition Temperature>
Glass transition temperature (Tg) (°C) was determined according to the following method using a dynamic mechanical analyzer (Rheometrics Inc., ARES).
Namely, acrylic polymer sheets (thickness: 20 µm) were laminated to a thickness of about 2 mm and stamped out in the shape of a circle having a diameter of 7.9 mm to prepare a cylindrical pellet. This pellet was used as the sample for measurement of glass transition temperature. The measurement sample was immobilized in a jig (parallel plates having a diameter of 7.9 mm), temperature dependency of loss elastic modulus G" was measured using the dynamic mechanical analyzer, and the temperature where the resulting G" curve reaches a maximum was defined to be the glass transition temperature (°C). The measurement conditions were as indicated below.
Measurement mode: Shear mode
Temperature range: -70 °C to 150°C
Heating rate: 5°C/min
Frequency: 1 Hz

<Measurement of Weight Average Molecular Weight>
Weight average molecular weight (Mw) was measured using a GPC apparatus (Tosoh Corp., HLC-8220GPC). Weight average molecular weight was determined based on standard polystyrene. Measurement conditions were as indicated below.
Sample concentration: 0.2% by weight (THF solution)
Sample injection volume: 10 µL
Eluant: THF

Flow rate: 0.6 mL/min
Measuring temperature: 40°C
Columns:
Sample columns: TSKguard Column Super HZ-H (1 column) +
TSKgel Super HZM-H (2 columns)

Reference column: TSKgel Super H-RC (1 column) Detector: Differential refractometer (RI)

<Measurement of Acid Value>
Acid value (mg KOH/g) was measured using an automatic titrator (COM-550, Hiranuma Sangyo Corp.), and determined according to the following equation.
A = {(Y-X) × f × 5.611}/M
A: Acid value (mg KOH/g)
Y: Amount of titrating solution required to titrate sample solution (mL)
X: Amount of titrating solution required to titrate 50 g of mixed solvent (mL)
f: Titrating solution factor
M: Weight of polymer sample (g)
Measurement conditions were as indicated below.
Sample solution: The sample solution was prepared by dissolving about 0.5 g of polymer sample in 50 g of mixed solvent (obtained by mixing toluene, 2-propanol and distilled water at a weight ratio of 50/49.5/0.5).
Titrating solution: 0.1 N 2-propanolic potassium hydroxide solution (Wako Pure Chemical Industries, Ltd., for use in petroleum product neutralization number testing) Electrode: Glass electrode, GE-101
Reference electrode: RE-201
Measurement mode: Petroleum product neutralization number test 1

<Measurement of Thickness> Thickness of the antistatic layer was measured by observing a cross-section of the PSA sheet of each example with a transmission electron microscope (TEM). Measurements were carried out at locations at 1/4, 2/4 and 3/4 of a width of 200 mm moving from one end to the other end in the direction of width (direction perpendicular to the direction of movement of a bar coater) along a straight line extending across the PSA sheet in the direction of width. The average thickness Dave was determined from the arithmetic average of thickness at these three locations.

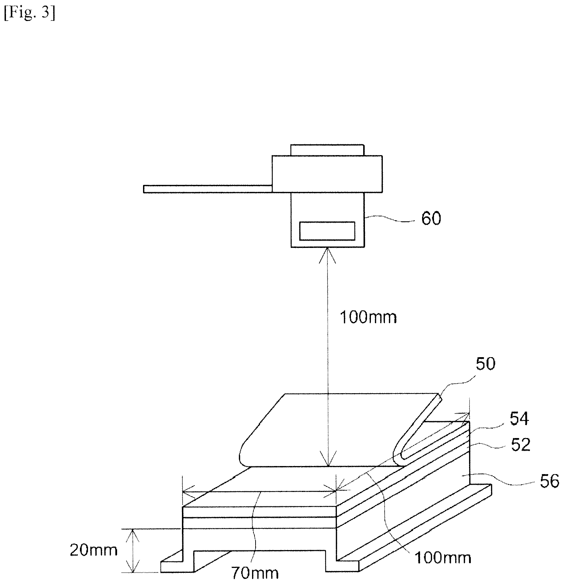

<Measurement of Peeling Static Voltage (Adherend Side)>
The PSA sheet of each example was cut to a size measuring 70 mm wide and 130 mm long, and after peeling off the release liner, as shown in FIG. 3 a PSA sheet 50 was pressed with a hand roller onto the surface of a polarizing plate 54 (Nitto Denko Corp., SEG1423DU polarizing plate, width: 70 mm, length: 100 mm) laminated onto a preliminarily statically discharged acrylic plate 52 (Mitsubishi Rayon Co., Ltd., trade name: "Acrylite", thickness: 1 mm, width: 70 mm, length: 100 mm) so that one end of the PSA sheet 50 protruded 30 mm from the edge of the polarizing plate 54.
After allowing the sample to stand for one day in environment at 23°C and 50% RH, it was placed at a prescribed location on a sample stand 56 having a height of 20 mm. The end of the PSA sheet 50 protruding 30 mm from the polarizing plate 54 was attached to an automatic winding machine (not shown) and peeled at a peeling angle of 150° and peeling speed of 10 m/min. The electrical potential generated on the surface of the adherend (polarizing plate) at this time was measured with an electrical potential measuring device 60 (Kasuga Electric Works, Ltd., Model "KSD-0103") fixed at a location 100 mm above the center of the polarizing plate 54. Measurements were carried out in environments of 23°C and 50% RH (normal humidity) and 23°C and 25% RH (low humidity).

<Measurement of Peeling Static Voltage (PSA Sheet Side)>
The PSA sheet was peeled from the surface of the polarizing plate at a peeling angle of 150°C and peeling speed of 10 m/min in the same manner as the previously described measurement of peeling static voltage for the polarizing plate. The electrical potential of the PSA sheet generated at this time was measured with an electrical potential measuring device (Kasuga Electric Works, Ltd., Model "KSD-0103") fixed at a location 100 mm above the center of the PSA sheet. Measurements were carried out in environments of 23°C and 50% RH (normal humidity) and 23°C and 25% RH (low humidity).

<Evaluation of Soiling>
The PSA sheet of each example was cut to a size of 50 mm wide and 80 mm long, and after peeling off the release liner, was laminated onto a polarizing plate measuring 70 mm wide and 100 mm long (Nitto Denko Corp., SEG1423DU polarizing plate, width: 70 mm, length: 100 mm) at a pressure of 0.25 MPa and laminating speed of 0.3 m/min. After allowing this to stand for one week in an environment at 23°C and 50% RH, the PSA sheet was peeled from the polarizing plate by hand. Soiling of the surface of the polarizing plate after peeling was observed with the naked eye by comparing with a polarizing plate to which the PSA sheet had not yet been adhered. The evaluation criteria were as indicated below.
S: No pollution observed
G: Slight pollution observed, but not a problem in terms of practical use
NG: Prominent pollution observed

<Evaluation of Scratch Resistance> The PSA sheet of each example was affixed to a slide glass. The back of the PSA sheet was rubbed using the edge of a coin (new 10 yen coin) at a load of 300 g as determined with a precision balance in a measuring environment of 23°C and 50% RH. The resulting scratch marks were observed with a light microscope, and scratch resistance was evaluated as NG (unacceptable) in the case the presence of removed pieces of the antistatic layer was confirmed, or evaluated as G (acceptable) in the case the presence of such removed pieces was not confirmed.

Compositions used to produce the PSA sheets of the examples were prepared in the manner described below.
<Antistatic Coating Composition (D1)>
A solution (binder solution (A1)) was prepared containing 5% of an acrylic polymer used as a binder (binder polymer (B1)) in toluene. Preparation of the binder solution (A1) was carried out in the manner described below. Namely, 25 g of toluene were placed in a reactor and after raising the temperature in the reactor to 105°C, a solution obtained by mixing 30 g of methyl methacrylate (MMA), 10 g of n-butyl acrylate (BA), 5 g of cyclohexyl methacrylate (CHMA) and 0.2 g of azobisisobutyronitrile (AIBN) was continuously dropped into the reactor over the course of 2 hours. Following completion of dropping, the temperature in the reactor was adjusted to 110°C to 115°C, and a copolymerization reaction was carried out by holding at the same temperature for 3 hours. Three hours later, a mixture of 4 g of toluene and 0.1 g of AIBN was dropped into the reactor followed by the holding at the same temperature for 1 hour. Subsequently, the temperature inside the reactor was lowered to 90°C and the non-volatile component content (NV) was adjusted to 5% by diluting with toluene.
2 g of the binder solution (A1) (containing 0.1 g of the binder polymer (B1)) and 40 g of ethylene glycol monoethyl ether were placed in a beaker having a volume of 150 mL followed by stirring and mixing. Next, 1.2 g of an electroconductive polymer aqueous solution (C1), having an NV of 4.0% and containing polyethylenedioxythiophene (PEDT) and polystyrene sulfonate (PSS), 55 g of ethylene glycol monomethyl ether, 0.05 g of polyether-modified polydimethylsiloxane-based leveling agent (BYK Chemie GmbH, trade name: "BYK-300", NV: 52%) and a melamine-based crosslinking agent were further added to the beaker followed by mixing well by stirring for about 20 minutes. Thus, a coating composition (D1) was prepared that had an NV value of 0.18% and contained 50 parts of an electroconductive polymer, 30 parts of lubricant (both based on the solid fractions thereof) and a melamine-based crosslinking agent based on 100 parts of the binder polymer (B1) (base resin).

<Antistatic Coating Composition (D2)>
The main agent, "BONDEIP PA-200" (Konishi Co., Ltd., NV: 32%), used as an antistatic agent was adjusted to an NV value of 2.1% by diluting with a mixed solvent of isopropyl alcohol and soft water present in a weight ratio of 2:1. 25 parts of the curing agent, "BONDEIP PA-100" (Konishi Co., Ltd., NV: 8.2%), were added to 100 parts of this solution to obtain a solution having an NV value of 2.5%. A coating composition (D2) was prepared by diluting this solution to an NV value of 1.15% by addition of isopropyl alcohol.

<PSA Composition (G1)>
199 parts of 2-ethylhexyl acrylate (2EHA), 1 part of a reactive surfactant (Kao Corp., trade name: "Latemul PD-420"), 8 parts of 2-hydroxyethyl acrylate (HEA), 0.4 parts of AIBN and 386 parts of ethyl acetate were placed in a four-mouth flask equipped with a stirring blade, thermometer, nitrogen gas feed tube, condenser and dropping funnel followed by introducing nitrogen gas while stirring gently, holding the temperature of the liquid in the flask to the vicinity of 65°C and carrying out a polymerization reaction for 6 hours to prepare an acrylic polymer (P1) solution having an NV value of 35%. The Tg of this acrylic polymer (P1) was -10°C or lower, the Mw was 41 × 10⁴, and the acid value was 0.0 mgKOH/g.
0.04 parts of 1-butyl-3-methylpyridinium bis(trifluoromethanesulfonyl)imide (Japan Carlit Co., Ltd., trade name: "CIL-312", ionic liquid in a liquid state at 25°C), 0.4 parts of an isocyanurate form of hexamethylene diisocyanate (Nippon Polyurethane Industry Co., Ltd., trade name: "Coronate HX") and 0.4 parts of dibutyltin dilaurate as crosslinking catalyst (1% ethyl acetate solution) were added to 100 parts of a solution obtained by diluting the acrylate polymer (P1) solution to an NV of 20% by adding ethyl acetate, followed by stirring and mixing for about 1 minute at 25°C. Thus, an acrylic PSA composition (G1) was prepared that contained an ionic liquid as the ionic compound.

<PSA Composition (G2)>
200 parts of 2EHA, 8 parts of HEA, 0.4 parts of AIBN and 312 parts of ethyl acetate were placed in a four-mouth flask equipped with a stirring blade, thermometer, nitrogen gas feed tube, condenser and dropping funnel followed by introducing nitrogen gas while stirring gently, holding the temperature of the liquid in the flask to the vicinity of 65°C and carrying out a polymerization reaction for 6 hours to prepare an acrylic polymer (P2) solution having an NV value of 40%. The Tg of this acrylic polymer (P2) was -10°C or lower, the Mw was 55 × 10⁴, and the acid value was 0.0.
0.04 parts of lithium bis(trifluoromethanesulfonyl)imide, 0.10 parts of polypropylene glycol-polyethylene glycol-polypropylene glycol (Aldrich Corp.), 0.4 parts of an isocyanurate form of hexamethylene diisocyanate (Nippon Polyurethane Industry Co., Ltd., trade name: "Coronate HX") and 0.4 parts of dibutyltin dilaurate as crosslinking catalyst (1% ethyl acetate solution) were added to 100 parts of a solution obtained by diluting the acrylate polymer (P2) solution to an NV of 20% by adding ethyl acetate, followed by stirring and mixing for about 1 minute at 25°C. Thus, an acrylic PSA composition (G2) was obtained that contained a lithium salt as the ionic compound.

<PSA Composition (G3)>
0.4 parts of an isocyanurate form of hexamethylene diisocyanate (Nippon Polyurethane Industry Co., Ltd., trade name: "Coronate HX") and 0.4 parts of dibutyltin dilaurate as crosslinking catalyst (1% ethyl acetate solution) were added to 100 parts of a solution obtained by diluting the acrylate polymer (P1) solution to an NV of 20% by adding ethyl acetate, followed by stirring and mixing for about 1 minute at 25°C. Thus, an acrylic PSA composition (G3) was obtained that did not contain an ionic compound. This PSA composition (G3) is equivalent to a composition from which the ionic liquid has been omitted from the PSA composition (G1).

<Production of PSA Sheet>
(Example 1)
The coating composition (D 1) was coated to a thickness after drying of 10 nm onto a corona-treated side of a transparent polyethylene terephthalate (PET) film subjected to corona treatment on a first side thereof and having a thickness of 38 µm, width of 30 cm and length of 40 cm. A substrate film (E1) provided with an antistatic layer, having an antistatic layer on a first side of a PET film, was produced by drying this coated film by heating to 130°C for 2 minutes. The PSA composition (G1) containing an ionic liquid was then coated onto a second side of this substrate film (E1) to form a PSA layer having a thickness of 15 µm by heating at 130°C for 2 minutes and drying. The silicone-treated side of a PET film (release liner) having a thickness of 25 µm and subjected to silicone treatment on one side thereof was laminated to this PSA layer to produce a PSA sheet according to the present example. This PSA sheet had an antistatic layer having a thickness of 10 nm formed from the coating composition (D1) on a first side of a PET film, and a PSA layer having a thickness of 15 µm formed from the PSA composition (G1) on a second side of the PET film.

(Example 2)
A substrate film (E2) provided with an antistatic layer was produced in the same manner as Example 1 with the exception of adjusting the coated amount of the coating composition (D1) so that the thickness of the antistatic layer was 20 nm. A PSA sheet according to the present example was then produced in the same manner as Example 1 with the exception of using this substrate film (E2). This PSA sheet had an antistatic layer having a thickness of 20 nm formed from the coating composition (D1) on a first side of a PET film, and a PSA layer having a thickness of 15 µm formed from the PSA composition (G1) on a second side of the PET film.

(Example 3)
A substrate film (E3) provided with an antistatic layer was produced in the same manner as Example 1 with the exception of adjusting the coated amount of the coating composition (D1) so that the thickness of the antistatic layer was 40 nm. A PSA sheet according to the present example was then produced in the same manner as Example 1 with the exception of using this substrate film (E3). This PSA sheet had an antistatic layer having a thickness of 40 nm formed from the coating composition (D1) on a first side of a PET film, and a PSA layer having a thickness of 15 µm formed from the PSA composition (G1) on a second side of the PET film.

(Example 4)
A PSA layer having a thickness of 15 µm was formed by coating the PSA composition (G2) containing a lithium salt onto a second side of the substrate film (E1) provided with an antistatic layer followed by drying by heating at 130°C for 2 minutes. The silicone-treated side of the same release liner as that used in Example 1 was laminated to this PSA layer to produce a PSA sheet according to the present example. This PSA sheet had an antistatic layer having a thickness of 10 nm formed from the coating composition (D1) on a first side of a PET film, and a PSA layer having a thickness of 15 µm formed from the PSA composition (G2) on a second side of the PET film.

(Example 5)
A PSA sheet according to the present example was produced in the same manner as Example 4 with the exception of using the substrate film (E2) provided with an antistatic layer instead of the substrate film (E1) provided with an antistatic layer. This PSA sheet had an antistatic layer having a thickness of 20 nm formed from the coating composition (D1) on a first side of a PET film, and a PSA layer having a thickness of 15 µm formed from the PSA composition (G2) on a second side of the PET film.

(Example 6)
A PSA sheet according to the present example was produced in the same manner as Example 4 with the exception of using the substrate film (E3) provided with an antistatic layer instead of the substrate film (E1) provided with an antistatic layer. This PSA sheet had an antistatic layer having a thickness of 40 nm formed from the coating composition (D1) on a first side of a PET film, and a PSA layer having a thickness of 15 µm formed from the PSA composition (G2) on a second side of the PET film.

(Example 7)
A substrate film (E4) provided with an antistatic layer, having an antistatic layer having a thickness of 10 nm on a first side of a PET film, was produced in the same manner as Example 1 with the exception of using the coating composition (D2) instead of the coating composition (D1). The PSA composition (G1) was coated onto a second side of this substrate film (E4) and a PSA layer having a thickness of 15 µm was formed by drying by heating at 130°C for 2 minutes. The silicone-treated side of the same release liner as that used in Example 1 was laminated to this PSA layer to produce a PSA sheet according to the present example. This PSA sheet had an antistatic layer having a thickness of 10 nm formed from the coating composition (D2) on a first side of a PET film, and a PSA layer having a thickness of 15 µm formed from the PSA composition (G1) on a second side of the PET film.

(Example 8)
A substrate film (E5) provided with an antistatic layer was produced in the same manner as Example 7 with the exception of adjusting the coated amount of the coating composition (D2) so that the thickness of the antistatic layer was 20 nm. A PSA sheet according to the present example was then produced in the same manner as Example 7 with the exception of using this substrate film (E5). This PSA sheet had an antistatic layer having a thickness of 20 nm formed from the coating composition (D2) on a first side of a PET film, and a PSA layer having a thickness of 15 µm formed from the PSA composition (G1) on a second side of the PET film.

(Example 9)
A PSA sheet according to the present example was obtained in the same manner as Example 7 with the exception of using the PSA composition (G2) instead of the PSA composition (G1). This PSA sheet had an antistatic layer having a thickness of 10 nm formed from the coating composition (D2) on a first side of a PET film, and a PSA layer having a thickness of 15 µm formed from the PSA composition (G2) on a second side of the PET film.

(Example 10)
A PSA sheet according to the present example was produced in the same manner as Example 1 with the exception of not coating an antistatic coating composition onto a first side of a PET film. In this PSA sheet, the first side of the PET film was exposed, and the PSA sheet had a PSA layer having a thickness of 15 µm formed from the PSA composition (G1) on a second side of the PET film.

(Example 11)
A PSA sheet according to the present example was obtained in the same manner as Example 10 with the exception of using the PSA composition (G2) instead of the PSA composition (G1). In this PSA sheet, the first side of the PET film was exposed, and the PSA sheet had a PSA layer having a thickness of 15 µm formed from the PSA composition (G2) on a second side of the PET film.

(Example 12)
The PSA composition (G3) not containing an ionic compound was coated onto a second side of the substrate film (E2) provided with an antistatic layer, and a PSA layer having a thickness of 15 µm was formed by drying by heating at 130°C for 2 minutes. A PSA sheet according to the present example was produced by laminating the silicone-treated side of the same release liner as that of Example 1 to this PSA layer. This PSA sheet had an antistatic layer having a thickness of 20 nm formed from the coating composition (D1) on a first side of a PET film, and a PSA layer having a thickness of 15 µm formed from the PSA composition (G3) on a second side of the PET film.

The results of carrying out each of the previously described measurements and evaluations on the PSA sheets of Examples 1 to 12 are shown in Tables 1 and 2 along with the general configurations of each of the PSA sheets.

[Table 1]

| Example | Antistatic Layer | | PSA Layer | Peeling Static Voltage (50% RH) | | Soiling |
|---|---|---|---|---|---|---|
| | Antistatic component | Thickness (nm) | Antistatic component | Adherend side (kV) | PSA sheet side (kV) | |
| 1 | lectroconductive polymer | 10 | Ionic liquid | -0.7 | 0.0 | S |
| 2 | Electroconductive polymer | 20 | Ionic liquid | -0.7 | 0.0 | S |
| 3 | Electroconductive polymer | 40 | Ionic liquid | -0.7 | 0.0 | S |
| 4 | Electroconductive polymer | 10 | Lithium salt | 0.0 | 0.0 | G |
| 5 | Electroconductive polymer | 20 | Lithium salt | 0.0 | 0.0 | G |
| 6 | Electroconductive polymer | 40 | Lithium salt | 0.0 | 0.0 | G |
| 7 | Quaternary ammonium salt | 10 | Ionic liquid | -0.7 | 0.0 | S |
| 8 | Quaternary ammonium salt | 20 | Ionic liquid | -0.7 | 0.0 | S |
| 9 | Quaternary ammonium salt | 10 | Lithium salt | 0.0 | 0.0 | G |
| 10 | - | - | Ionic liquid | -2.4 | 16.9 | S |
| 11 | - | - | Lithium salt | -0.9 | 6.0 | G |
| 12 | Electroconductive polymer | 20 | - | 1.8 | 0.0 | S |

As shown in Table 1, the PSA sheets of Examples 1 to 9, which have an antistatic layer of a thickness of 1 nm to less than 100 nm (and more particularly, 1 nm to less than 50 nm) that contains an antistatic component and a binder component and an acrylic PSA layer containing an ionic compound as an antistatic component, on a first side and a second side, respectively, of a polyester film, have a peeling static voltage at 50% RH of within ±1 kV (and more particularly, -0.7 kV to 0 kV) for both the adherend side and the protective film side, and demonstrated favorable antistatic performance. In addition, each of these PSA sheets demonstrated a sufficiently low level of pollution for practical use. In addition, the PSA sheets of Examples 1 to 6 demonstrated extremely little differences in appearance (such as visually perceptible whitening and partial unevenness) in comparison with the PSA sheets of Examples 10 and 11 not having an antistatic layer, and had favorable appearance quality. In particular, the PSA sheets of Examples 1, 2, 4 and 5 demonstrated particularly favorable appearance quality.

[Table 2]

| Example | Antistatic Layer | | PSA Layer | Peeling Static Voltage (25% RH) | | Scratch Resistance |
|---|---|---|---|---|---|---|
| | Antistatic component | Thickness (nm) | Antistatic component | Adherend side (kV) | PSA sheet side (kV) | |
| 1 | Electroconductive polymer | 10 | Ionic liquid | -0.6 | 0.0 | G |
| 2 | Electroconductive polymer | 20 | Ionic liquid | -0.6 | 0.0 | G |
| 3 | Electroconductive polymer | 40 | Ionic liquid | -0.5 | 0.0 | G |
| 4 | Electroconductive polymer | 10 | Lithium salt | -0.1 | 0.0 | G |
| 5 | Electroconductive polymer | 20 | Lithium salt | 0.0 | 0.0 | G |
| 6 | Electroconductive polymer | 40 | Lithium salt | 0.0 | 0.0 | G |
| 7 | Quaternary ammonium salt | 10 | Ionic liquid | -2.3 | 16.2 | NG |
| 8 | Quaternary ammonium salt | 20 | Ionic liquid | -2.0 | 4.0 | NG |
| 9 | Quaternary ammonium salt | 10 | Lithium salt | -0.8 | 12.3 | NG |
| 10 | - | - | Ionic liquid | -2.2 | 18.0 | - |
| 11 | - | - | Lithium salt | -1.0 | 12.6 | - |
| 12 | Electroconductive polymer | 20 | - | 1.3 | 0.5 | G |

As shown in Table 2, the PSA sheets of Examples 1 to 6 having an antistatic layer that contains an electroconductive polymer as the antistatic component demonstrated peeling static voltages at 25% RH of within ±1 kV (and more particularly, -0.6 kV to 0 kV) for both the adherend side and PSA sheet side, and demonstrated favorable antistatic performance even in a low humidity environment. These adhesive sheets also demonstrated favorable scratch resistance.

In contrast, in the case of the PSA sheet of Example 12, accumulation of static electricity on the adherend side was unable to be adequately prevented by only the antistatic layer under either normal humidity or low humidity conditions since the PSA layer did not contain the antistatic component. In addition, the peeling static voltage on the PSA sheet side was higher than that of Examples 1 to 6 under low humidity conditions. On the other hand, in the case of the PSA sheets of Examples 10 and 11 not having an antistatic layer on the back side thereof, peeling static voltage on the back side of the PSA sheet was high under both normal humidity and low humidity conditions and peeling static voltage on the adherend side was also clearly higher than that of Examples 1 to 6, thereby preventing the obtaining of adequate antistatic performance with only the PSA layer of the previously described composition. In addition, the level of pollution was observed to demonstrate an increasing trend (decrease in low pollution properties) when the amount of electrostatic component contained in the PSA layer was increased.

### INDUSTRIAL APPLICABILITY

The PSA sheet disclosed herein is suitable for use as a surface protective film for protecting an optical member during manufacturing or transport of that optical member used as a constituent of a liquid crystal display panel, plasma display panel (PDP) or electroluminescence (EL) display and the like. In particular, the PSA sheet disclosed herein is useful as a surface protective film (optical surface protective film) applied to an optical member such as a polarizing plate (polarizing film), retardation plate, phase difference plate, optical compensation film, brightness enhancement film, optical diffusing sheet or reflecting sheet for a liquid crystal display panel.

## Claims

1. A pressure-sensitive adhesive sheet, comprising:
a substrate film comprising a transparent resin material;
an antistatic layer provided on a first side of the substrate film, containing an antistatic component and a binder resin, and having an average thickness Dave of 1 nm to less than 100 nm; and
a pressure-sensitive adhesive layer provided on a second side of the substrate film, containing an acrylic polymer as a base polymer and an ionic compound as an antistatic component.

2. The pressure-sensitive adhesive sheet according to claim 1, wherein the antistatic layer contains an electroconductive polymer as the antistatic component.

3. The pressure-sensitive adhesive sheet according to claim 1 or 2, wherein the antistatic layer contains a polythiophene as the antistatic component.

4. The pressure-sensitive adhesive sheet according to any of claims 1 to 3, wherein the antistatic layer contains an acrylic resin as the binder resin.

5. The pressure-sensitive adhesive sheet according to any of claims 1 to 4, wherein the antistatic layer is crosslinked with a melamine-based crosslinking agent.

6. The pressure-sensitive adhesive sheet according to any of claims 1 to 5, wherein the antistatic layer contains a lubricant.

7. The pressure-sensitive adhesive sheet according to any of claims 1 to 6, wherein the pressure-sensitive adhesive layer contains at least one of an ionic liquid and an alkaline metal salt as the ionic compound.

8. The pressure-sensitive adhesive sheet according to claim 7, wherein the ionic liquid is at least one selected from the group consisting of a nitrogen-containing onium salt, a sulfur-containing onium salt and a phosphorous-containing onium salt.

9. The pressure-sensitive adhesive sheet according to any of claims 1 to 7, wherein the ionic compound is a lithium salt.

10. A surface protective film, comprising the pressure-sensitive adhesive sheet according to any of claims 1 to 9.

11. Use of the surface protective film according to claim 10 for protecting a surface of an optical member.
